# EUROPÄISCHE PATENTSCHRIFT

(11) **EP 1 706 723 B1**
(45) Veröffentlichungstag und Bekanntmachung des Hinweises auf die Patenterteilung: **16.10.2013**
(21) Anmeldenummer: 04804199.0
(22) Anmeldetag: 22.12.2004
(51) Int. Cl.: G01N 21/05

(54) **Hochgenauer strömungsorientierter Mehrwinkel-Remissionssensor**
Precise flow-oriented multi-angle remission sensor
Capteur de réflexion diffuse multiangulaire à flux orienté présentant une précision élevée

(30) Priorität: 22.12.2003 DE 10361058
(43) Veröffentlichungstag der Anmeldung: 04.10.2006
(73) Patentinhaber: BASF Coatings GmbH, 48165 Münster (DE)
(72) Erfinder: WAGNER, Beate, 67271 Neuleiningen (DE); ETTMÜLLER, Jürgen, 67454 Hassloch (DE); SCHÄFER, Michael, 67122 Altrip (DE); LOHMANN, Jürgen, 48165 Münster (DE); BERG, Jan, 48165 Münster (DE); DAISS, Andreas, 68165 Mannheim (DE)
(74) Vertreter: Isenbruck, Günter
(86) Internationale Anmeldenummer: PCT/EP2004/014603
(87) Internationale Veröffentlichungsnummer: WO 2005/062022

(56) Entgegenhaltungen:
- WO-A-02/075285
- DE-A1- 2 445 148
- DE-A1- 10 149 780
- US-A- 5 883 721
- KACHEL V ET AL: "UNIFORM LATERAL ORIENTATION, CAUSED BY FLOW FORCES, OF FLAT PARTICLES IN FLOW-THROUGH SYSTEMS" JOURNAL OF HISTOCHEMISTRY AND CYTOCHEMISTRY, HISTOCHEMICAL SOCIETY, NEW YORK, NY, US, Bd. 25, Nr. 7, 1977, Seiten 774-780, XP002915897 ISSN: 0022-1554

## Beschreibung

Die Erfindung betrifft eine dreidimensionale Strömungszelle zur Ausrichtung von nicht isometrischen Partikeln in einer flüssigen Probe in zwei Achsen, ein Verfahren zur Ausrichtung von nicht isometrischen Partikeln in einer flüssigen Probe, die Verwendung einer dreidimensionalen Strömungszelle zur Ausrichtung von nicht isometrischen Partikeln in einer flüssigen Probe in zwei Achsen, einen Remissionssensor aufgebaut aus einer optischen Einheit, einer Probenanalyseeinheit und einer System-Kontrolleinheit sowie ein Verfahren zur Messung der Remission einer flüssigen Probe enthaltend nicht isometrische Partikel und die Verwendung eines Remissionssensors zur Messung der Remission einer flüssigen Probe, enthaltend nicht isometrische Partikel, bevorzugt einer flüssigen Probe in Form einer flüssigen Pigmentpräparation enthaltend nicht isometrische Partikel, in verschiedenen Verfahrensstufen während der Herstellung, Weiterverarbeitung und Anwendung der Probe, bevorzugt der flüssigen Pigmentpräparation.

Die Bestimmung der Remission von streuenden Präparationen wie flüssigen Proben, die Partikel enthalten (Dispersionen), ist eine wesentliche Qualitätsprüfung. Gemäß dem Stand der Technik wird die Bestimmung der Remission mit Einwinkel- und Mehrwinkel-Farbmessgeräten vorgenommen, nachdem aus diesen Präparationen eine feste Oberfläche gebildet wurde.

Typische flüssige Proben, die Partikel enthalten, sind flüssige Pigmentpräparationen. Bei der Herstellung von flüssigen Pigmentpräparationen wie Lack- oder Emaillemischungen, Pigmentpasten, Weißabmischungen oder anderen Farbmischungen ist eine reproduzierbare Farbe und Deckkraft der Mischungen wesentlich. Diese Reproduzierbarkeit wird durch regelmäßige Produktkontrolle bei der Herstellung der flüssigen Pigmentpräparationen entweder visuell oder mit Hilfe spektroskopischer Methoden gewährleistet. Gemäß dem Stand der Technik erfolgt die Kontrolle durch Mischen der gewünschten Farbmischungen, Aufbringen auf ein Substrat und Trocknen, Härten oder Einbrennen und anschließende Analyse der erhaltenen farbigen Schichten. Dieses Verfahren ist zwar genau, jedoch sehr zeitaufwendig.

Eine wesentliche Zeitersparnis und zum Teil bessere und reproduzierbarere Ergebnisse können dadurch erzielt werden, dass die Messung direkt an den flüssigen Pigmentpräparationen erfolgt, so dass ein Aufbringen von farbigen Schichten auf ein Substrat und anschließendes Trocknen der Schichten nicht erforderlich ist. Die Remissionsmessung an flüssigen Produkten hat einen zusätzlichen Anwendungsbereich, da auch bei "sonstigen" Produkten, die nicht unmittelbar für die Erzeugung von Oberflächen (als Beschichtung oder Oberfläche eines Bauteils) bestimmt sind, aus der Remission spezielle Produkt- und Prozesseigenschaften ermittelt werden können, und die in Bezug auf den dispersen Zustand (z.B. PGV (Partikelgrößenverteilung), Form, Konzentration) oder auf Materialeigenschaften (z.B. Brechungsindex, Kristallmodifikation, chemische Zusammensetzung) interpretiert werden können.

Grundsätzlich sind für diese Aufgabe alle kommerziellen Farbmessgeräte geeignet. Jeder in Remission arbeitende VIS-Sensor (VIS = visible, d.h. Bereich des sichtbaren Lichts von 380 nm bis 800 nm) ist ebenfalls dazu geeignet.

So betrifft EP-A 0 472 899 eine photometrische Messeinrichtung zur Messung des Dämpfungsgrades bei der Lichtausbreitung in dispersen Systemen. Diese Einrichtung ist aus einer durchströmbaren Küvette für die zu untersuchende Probe mit mindestens einer seitlichen Öffnung zum optischen Anschluss mindestens eines Lichtwellenleiters aufgebaut. Von einer Lichtquelle führt eine Lichtwellenleiterverbindung an das Innere der Küvette mit der zu untersuchenden Probe und von dort zu einem Lichtdetektor zur Erzeugung eines Messsignals. Eine direkte Lichtwellenleiterverbindung führt von der Lichtquelle direkt zum Lichtdetektor zur Erzeugung eines Referenzsignals. Des weiteren umfasst die photometrische Einrichtung ein an den Lichtdetektor angeschlossenes Auswertegerät.

WO 98/16822 betrifft ein Analysesystem zur Analyse der physikalischen Eigenschaften von Lacken, Pigmentpasten oder ähnlichen Systemen, das aus einer Vorrichtung zur Ausbildung eines Films der Lacke, Pigmentpasten und ähnlichen Systemen mit einer spezifischen Dicke, einer Lichtquelle zum Bestrahlen des zu untersuchenden Lacks oder der zu untersuchenden Pigmentpaste oder ähnlichen Systemen aufgebaut ist, wobei eine Wechselwirkung zwischen dem Licht und dem Lack, der Pigmentpaste oder ähnlichen Systemen auftritt, wobei ein Messsignal erzeugt wird; und einer Vorrichtung zur Aufnahme des Messsignals sowie einem mit der Vorrichtung zur Aufnahme des Messsignals verbundenen Detektor aufgebaut ist.

Die prioritätsältere deutsche Anmeldung DE 105 30 641 A betrifft einen Remissionssensor (Ausführungsform (I)), aufgebaut aus
a) einer optischen Einheit, die
   aa) eine Lichtquelle in Form einer Lampe, und
   ab) eine Faseroptik umfassend Lichtwellenleiter, wobei mindestens ein Lichtwellenleiter ein Referenzleiter ist,
   umfasst,
b) einer Probenanalyseeinheit, die
   ba) ein Messfenster, und
   bb) eine Probenanalysezelle,
   umfasst,
   wobei auf einer Seite des Messfensters die optische Einheit angeordnet ist und auf der anderen Seite des Messfensters die Probenanalysezelle angeordnet ist, indem diese so an das Messfenster angepresst ist, dass ein Spalt zwischen Messfenster und Probenanalysezelle gebildet wird, den eine zu messende Probe in Form einer flüssigen Pigmentpräparation durchqueren muss, wobei bei der Durchquerung des Spalts eine erhebliche Scherung der Probe erfolgt,
   und
c) einer System-Kontrolleinheit umfassend Detektoren zur Aufnahme von Messdaten und ein daran angeschlossenes Auswertegerät,
wobei mindestens eine Lichtwellenleiterverbindung von der Lichtquelle zu dem Messfenster und von dem Messfenster weiter zum Detektor geführt wird, zur Erzeugung eines Messsignals (Remission des Produkts), und mindestens eine Referenzleiterverbindung direkt von der Lichtquelle zum Detektor oder vom Messfenster zum Detektor geführt wird, zur Erzeugung eines Referenzsignals (interner Reflex).

Dieser Remissionssensor zeichnet sich durch eine hohe Messgenauigkeit aus und stellt geeignete Messdaten zur Ermittlung der Farbe und Deckkraft von flüssigen Pigmentpräparationen bereit.

DE 24 45 148 A betrifft eine Vorrichtung zum Ausrichten von Teilchen in einer Suspension, insbesondere eine Vorrichtung zum Ausrichten von im Allgemeinen flachen Teilchen in einer Stellung, die zu ihrem Abtasten beim Passieren einer Kontrollvorrichtung in einem Schlitzverschluss-Lichtmessinstrument geeignet ist. Die Vorrichtung gemäß DE 24 45 148 A weist eine Durchflusskammer mit einem Eingang und einem Ausgang Für die Probenflüssigkeit auf, wobei die Durchflusskammer so konstruiert ist, dass das Verhältnis einer ersten zu einer zweiten Abmessung der Durchflusskammer in der Richtung des Probenflüssigkeitsstroms gleichmäßig zunimmt, wobei die erste Abmessung quer zur zweiten liegt und die Querschnittsfläche der Durchflusskammer, die im Allgemeinen senkrecht zu der Richtung des Flüssigkeitsstroms liegt, in der Richtung des Flüssigkeitsstroms gleichmäßig abnimmt. Es ergibt sich aus DE 24 45 148 A, dass ein Fluidelement, das die Durchflusskammer gemäß DE 24 45 148 A durchquert, in einer Achse gestaucht wird, in einer Achse weder gestaucht noch gedehnt wird und in einer Achse, nämlich in Strömungsrichtung, gedehnt wird.

Die im Stand der Technik bekannten Analysesysteme eignen sich zur Remissionsmessung von konventionellen flüssigen Proben mit isometrischen (d.h. gleichmäßigen) Partikeln, wie konventionelle Lacke, Uni-Lacke, d.h. Lacke, worin zu dem in der Regel (aber nicht zwingend) transparenten Bindemittel des Lacks Farbmittel, z.B. organische oder anorganische Pigmente, als Lackkomponenten zugegeben werden zur Erzielung dekorativer Farbeffekte, mit isometrischen Pigmenten bzw. isometrischen sonstigen Partikeln.

Zusätzlich können mit Effektpigmenten als ergänzende Lackkomponenten weitere optische Effekte hervorgerufen werden. Gemäß der vorliegenden Anmeldung umfasst die Gruppe der Effektpigmente Metallic-Pigmente und (die eigentlichen) Effektpigmente, z.B Interferenzpigmente. Solche Lacke werden als Effekt-Lacke bezeichnet. Ein metallischer Spiegeleffekt kann mittels Metallic-Pigmenten, z.B. plättchenförmigen Aluminiumflittern, erzeugt werden. Interferenzeffekte sind mittels so genannter Interferenzpigmente erzielbar. Dieses sind meist plättchenförmige Partikel aus praktisch transparentem Rumpfmaterial, z.B. Glimmer, mit einem Brechungsindex in der Größenordnung der umgebenden Bindemittelmatrix, wobei die Außenflächen mit einer optisch sehr hoch brechenden Beschichtung, z.B. aus Metalloxiden, ausgestattet sind. Sind einem Lack (im Allgemeinen neben den Farbmitteln) Metallic-Pigmente und/oder Effektpigmente zugegeben, so entstehen auf einen Betrachter (gewünschte) Effekte mit beachtlicher Anisotropie. Abhängig von der Betrachtungsrichtung variiert nämlich der Helligkeits- und Buntheitseindruck (goniochromatischer Effekt). Im Falle von Effektpigmenten tritt eine Variation des Farbtons hinzu. Die optischen Eigenschaften, insbesondere die Remission von flüssigen Proben solcher Effekt-Lacke, also Lacke, die nicht isometrische Partikel enthalten, sowie anderer flüssiger Proben, die nicht isometrische Partikel enthalten, sind somit abhängig von der Orientierung dieser nicht isometrischen Partikel in der flüssigen Probe.

Für korrekte, reproduzierbare Messungen, insbesondere Remissionsmessungen, von flüssigen Proben, die nicht isometrische Partikel enthalten, ist somit eine Ausrichtung der Partikel vor der Messung erforderlich. Bei nadelförmigen Partikeln genügt grundsätzlich eine Ausrichtung in einer Achse. Für eine korrekte Messung von Proben, die plättchenförmige Partikel enthalten, z.B. Metallic-Pigmente und/oder Effektpigmente, ist eine Ausrichtung in zwei Achsen erforderlich. Bei den im Stand der Technik bekannten Analysesystemen für flüssige Proben enthaltend Partikel erfolgt eine solche Ausrichtung der Proben nicht.

Aufgabe der vorliegenden Anmeldung ist daher die Bereitstellung eines Analysesystems zur Messung, insbesondere Remissionsmessung, von flüssigen Proben, die nicht isometrische Partikel enthalten, sowie die Bereitstellung einer Vorrichtung zur Ausrichtung von nicht isometrischen Partikeln in einer flüssigen Probe, insbesondere in einer flüssigen Pigmentpräparation.

Diese Aufgabe wird gelöst durch eine dreidimensionale Strömungszelle zur Ausrichtung von nicht isometrischen Partikeln in einer flüssigen Probe in zwei Achsen, umfassend eine Zulaufzone für die Probe enthaltend auszurichtende Partikel und einen Auslass für die Probe enthaltend in zwei Achsen ausgerichtete Partikel, wobei ein Fluidelement der Probe mit den Maßen a, b, c in einer Dehnungszone zu einem Fluidelement mit den Maßen a x n, b/(n x m), c x m umgeformt wird, wobei a die Breite, b die Höhe und c die Länge des Fluidelements bedeuten und n und m von der Geometrie der Strömungszelle abhängige Konstanten (Dehnungsgrad) sind, die positive Zahlen > 1 bedeuten.

Bei der flüssigen Probe enthaltend nicht, isometrische Partikel handelt es sich um Dispersionen. Bevorzugte flüssige Proben, die nicht isometrische Partikel enthalten, sind flüssige Pigmentpräparationen. Solche flüssigen Pigmentpräparationen sind bevorzugt Lack- oder Emaillemischungen, in Zukunft z.B. Pigmentpasten, in Spezialfällen Weiß- und Schwarzabmischungen oder andere Farbmischungen bzw. Mischungen, die nicht isometrische Partikel enthalten.

Die erfindungsgemäße dreidimensionale Strömungszelle eignet sich zum Einsatz in einem Analysesystem, bevorzugt in einem Remissionssensor, zur Messung von flüssigen Pigmentpräparationen, die in verschiedenen Verfahrensstufen der Herstellung, Weiterverarbeitung und Anwendung der flüssigen Pigmentpräparationen vorliegen. Das Analysesystem enthaltend die dreidimensionale Strömungszelle kann zum Beispiel zur Beurteilung von flüssigen Pigmentpräparationen während ihres Herstellungsverfahrens eingesetzt werden oder zur Beurteilung der Qualität der flüssigen Pigmentpräparationen bei ihrer Anwendung (zum Beispiel zur Farbanpassung in einer Lackieranlage) oder zur Kontrolle nachträglicher Farbänderungen der flüssigen Pigmentpräparationen durch Lagerung oder Scherung.

Dabei ist unter "Farbe" die Absorption + Streuung der Pigmentpräparationen zu verstehen. Typische "flüssige Pigmentpräparationen" ("pigmentierte" Präparation) sind Lacke und Farben sowie Pasten, und generell Beschichtungen.

Unter nicht isometrischen Partikeln sind insbesondere Effektstoffe zu verstehen, z.B. Metallic-Pigmente, d.h. Aluflakes, oder Effektpigmente oder nadel- oder plättchenförmige sonstige Partikel (unter sonstigen Partikeln sind solche Partikel zu verstehen, die nicht unter die vorstehend explizit aufgeführten Partikel fallen). Diese nicht isometrischen Partikel liegen nach der Verarbeitung der diese enthaltende Proben in einer ausgerichteten Form vor. Ganz besonders bevorzugte flüssige Proben, die nicht isometrische Partikel enthalten, sind somit Effekt-Lacke.

Das Prinzip der zweidimensionalen Ausrichtung in der erfindungsgemäßen dreidimensionalen Strömungszelle beruht darauf, dass die Fluidelemente einer laminaren Strömung in zwei untereinander orthogonalen Richtungen gedehnt werden. Wird die erfindungsgemäße dreidimensionale Strömungszelle in einer photometrischen Einrichtung eingesetzt, insbesondere in einem Remissionssensor, verlaufen die beiden untereinander orthogonalen Richtungen, in denen die Fluidelemente gedehnt werden, parallel zum Messfenster.

### Kurze Beschreibung der Abbildungen:

- Figur 1:: Bevorzugte Ausführungsformen der Strömungszelle
- Figur 2:: Verformung eines Fluidelementes mit den Maßen a, b, c in einer Ausführungsform der erfindungsgemäßen Strömungszelle
- Figur 3:: Anordnung von optischer Einheit und Probenanalyseeinheit zueinander
- Figur 4:: Optik, bei Beleuchtung unter einem Winkel und Messung unter mehreren Remissionswinkeln
- Figur 5:: Strahlengang bei Beleuchtung unter einem Winkel und Messung unter mehreren Remissionswinkeln
- Figur 6:: Optik bei Beleuchtung unter mehreren Beleuchtungswinkeln
- Figur 7:: Remissionssensor mit dreidimensionaler Strömungszelle zur Messung flüssiger Proben enthaltend nicht isometrische Partikel
- Figur 8:: Remissionssensor zur Messung fester Proben
- Figur 9:: Remissionssensor zur Messung eines Kalibrierstandards
- Figur 10:: Bevorzugte Ausführungsform eines Dämpfers
- Figur 11:: Bevorzugt eingesetztes System zur Remissionsmessung
- Figur 12:: Allgemeiner Messaufbau eines hochgenauen strömungsorientierten Mehrwinkel-Remissionssensors (FLOMAC)
- Figur 13:: Optik bei Beleuchtung in einem Winkel und Messung unter mehreren Winkeln; "FLOMAC-Dome",
- Figur 14:: Flopzahl eines Metallic-Pigments als Funktion des Druckabfalls an der erfindungsgemäßen dreidimensionalen Strömungszelle plus verschiedene Einzelmessungen an Blechen, die mit dem Effekt-Lack lackiert sind
- Figur 15:: Metallic Pigment gemessen mit dem Flomacs-Dome (**=** erfindungsgemäßer Remissionssensor) und dem X-Rite (= Remissionssensor des Standes der Technik; MA 68 II; Multi-Angle Spektrophotometer von X-Rite) (Beleuchtung unter 45° zur Senkrechten) gemessen an Blechen und in einer flüssigen Probe.
- Figur 16:: Remission von Metallic-Pigment gemessen mit dem erfindungsgemäßen Remissionssensor mit dreidimensionaler Strömungszelle in Abhängigkeit von der Strömung der flüssigen Probe

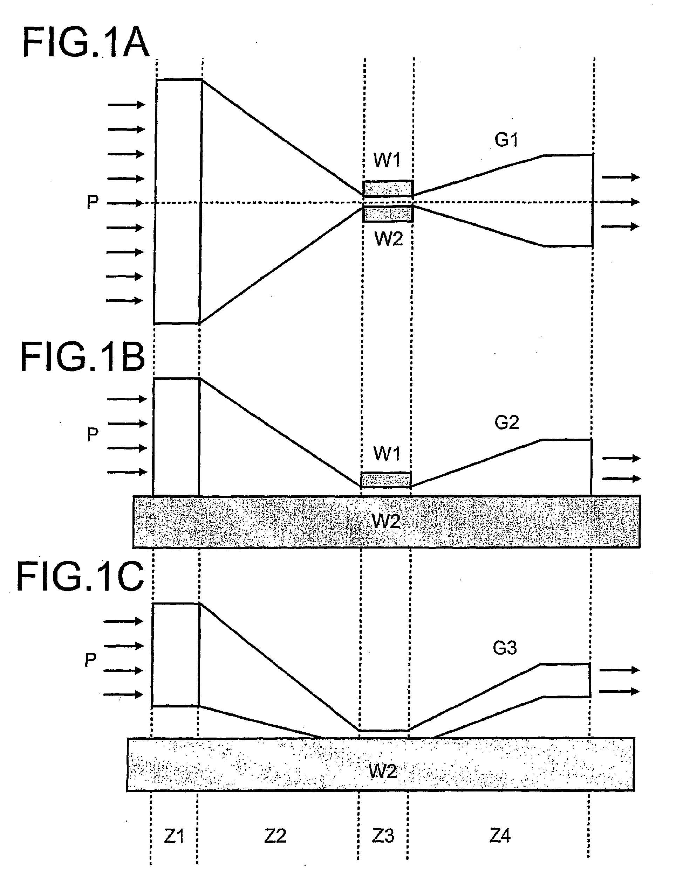

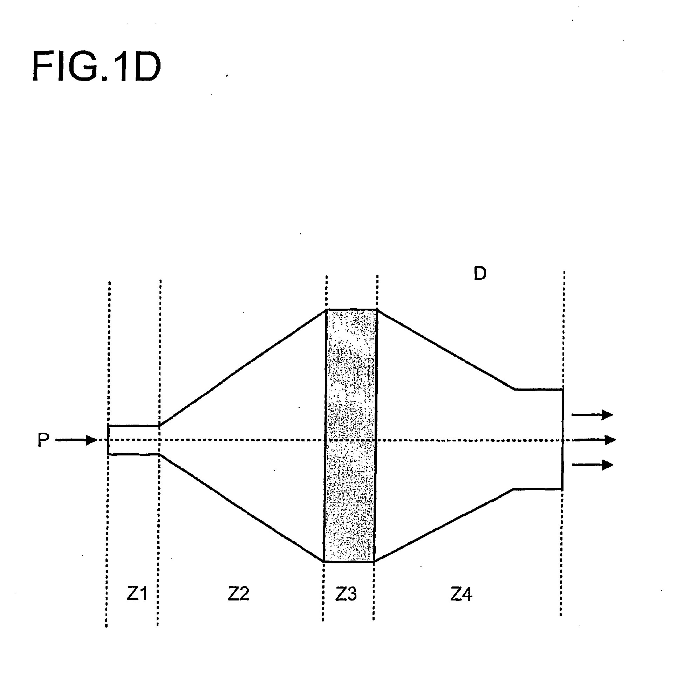

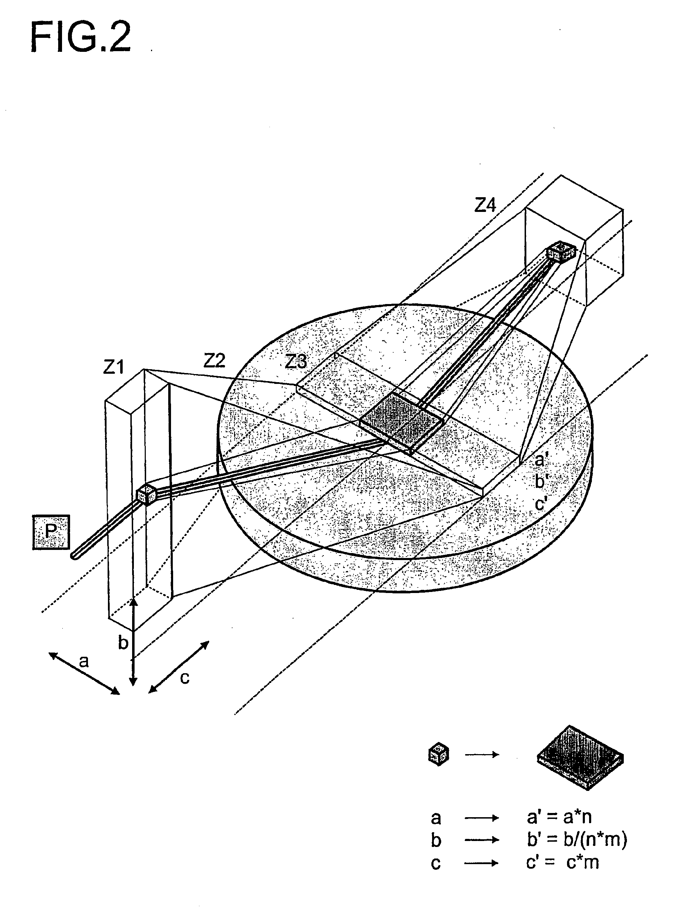

In Figur 1 ist eine Strömungszelle in bevorzugten Ausfügsformen (Fig. 1a, 1b, 1c, 1d) und in Figur 2 die Verformung eines Fluidelements mit den Maßen a, b, c dargestellt.
- *Figur 1:*: *bevorzugte Ausführungsformen der Strömungszelle*
Figur 1a, 1b, 1c: bevorzugten Ausführungformen der Strömungszelle in Seitenansicht;
Figur 1d: Aufsicht auf die in den Figuren 1a, 1b und 1c dargestellten Strömungszellen (für alle drei Ausführungsformen gleich)

Darin bedeuten:
- Z1: Zulaufzone
- Z2: Dehnungszone
- Z3: Messzone
- Z4: Auslaufzone
- P: Produktströmung

- W1: Messfenster 1
- W2: Messfenster 2
Seitenansicht

- G1: symmetrische Geometrie
- G2: unsymmetrische Geometrie
- G3: gefaltete Geometrie

- D: Draufsicht für alle gleich

- *Figur 2:*: *Verformung eines Fluidelementes mit den Maßen a, b, c in einer Ausführungsform der erfindungsgemäßen Strömungszelle*
Darin bedeuten:
- Z1: Zulaufzone
- Z2: Dehnungszone
- Z3: Messzone
- Z4: Auslaufzone
- P: Produktströmung

- a: Breite eines Fluidelements vor Verformung in der Strömungszelle
- b: Höhe eines Fluidelements vor Verformung in der Strömungszelle
- c: Länge eines Fluidelements vor Verformung in der Strömungszelle
- a': Breite des Fluidelements in der Messzone, d. h. nach Verformung
- b': Höhe des Fluidelements in der Messzone, d. h. nach Verformung
- c': Länge des Fluidelements in der Messzone, d. h. nach Verformung
- n, m: Dehnungsgrad

Die erfindungsgemäße dreidimensionale Strömungszelle umfasst eine Zulaufzone, in die eine auszurichtende flüssige Probe, enthaltend nicht isometrische Partikel eingeführt wird, eine Dehnungszone, in der jedes Volumenelement der flüssigen Probe in zwei Achsen gedehnt wird, eine parallel verlaufende Messzone, in der z.B. eine Remissionsmessung der in zwei Achsen ausgerichteten flüssigen Probe erfolgt, und einen Auslauf, aus dem die flüssige Probe enthaltend nicht isometrische Partikel ausgeführt wird.

Die flüssige Probe enthaltend nicht isometrische Partikel wird bevorzugt als laminarer Strom geführt.

Dieser im Allgemeinen laminare Strom der Probe wird vor dem Eintritt in die Strömungszelle mittels Strömungsgleichrichtung gleichgerichtet. Verfahren und Vorrichtungen zur Strömungleichrichtung sind dem Fachmann bekannt. Beispielsweise kann eine Strömungsgleichrichtung mittels eines Siebes erfolgen.

Die Länge der Dehnungszone in Strömungsrichtung wird so gestaltet, dass der Öffnungswinkel der begrenzenden Flächen zur mittleren Strömungsrichtung möglichst +/-15° bis +/-45° , besonders bevorzugt um die +/-30° beträgt.

Der Auslauf kann im Allgemeinen beliebig gestaltet werden. Grundsätzlich kann ein Zulauf auch als Auslauf verwendet werden, so dass man z.B. eine Zelle mit zwei unterschiedlichen Querschnittsumformungen einsetzen kann, die man je nach Durchströmungsrichtung als Zulauf verwendet. Nur der Zulauf, der auch als Zulauf verwendet wird (d.h. vor der Messzone liegt), beeinflusst die Ausrichtung.

Die Probe wird in der Regel mit einem Schlauch oder Rohr an die Anschlussöffnung im Zulauf der Probenanalysenzelle herangeführt. Von diesem in der Regel runden Anschlussquerschnitt muss der Probenstrom an den Eintrittsquerschnitt des Zulaufs angepasst werden, der in der Regel hoch und schmal ist. Dieser Eintrittsquerschnitt umfasst in der Regel ein Mittel zur Strömungsgleichrichtung, z.B. ein Sieb oder ein Gitter. Eine vorteilhafte Ausführung bildet vor diesem Querschnitt eine ähnlich hohe, aber weitere Kammer, in deren Rück- und/oder Seitenwände mehrere Teilströme in unterschiedlicher Höhe einmünden. Dazu wird der Probenzustrom auf eine entsprechende Zahl Teilströme aufgeteilt. Eine vorteilhafte Realisierung dieser Ausführung ist die Verwendung mehrerer Bohrungen mit Schlauchstutzen im Probenzellenkörper und die Verteilung mit einem Verteiler aus Rohren oder Schläuchen (z.B. ein Y- oder T-Stück von 1 auf 2).

In der einfachsten Form ist das Strömungsvolumen symmetrisch zu einer Mittelebene. In diesem Fall muss aber ein Fenster verwendet werden das rechteckig und nicht länger als die Messzone ist. Bei der bevorzugten Verwendung einer großen Planplatte und einer leicht abnehmbaren Messzelle muss das Strömungsvolumen modifiziert werden, in dem die Volumen Einlauf und Ablauf relativ zur Messzone von der Plattenebene weggeknickt werden. Eine mögliche Ausführung knickt gerade so weit, bis die sensorseitige Planfläche des Einlauf/Auslauf Volumen Deckungsgleich mit der Planscheibe ist. Vorteilhafter ist eine noch weitergehende Knickung, so dass sich noch ein Keil von Zellenmaterial zwischen Planplatte und Strömungsvolumen befindet (vorteilhaft ist ein Keilwinkel von 5° bis 30°, besonders vorteilhaft 15° bis 25°), und nur die Messzone direkt von der Platte begrenzt wird. Dadurch ist nur ein kleiner Teil der Scheibe produktberührt.

Wird ein Fluidelement der Maße a, b, c verformt (a Breite, b Höhe, c Länge), weil ein Strömungsquerschnitt A, B zu A x n, B/(n x m) umgeformt wird, so ergibt sich ein Fluidelement a x n, b/(n x m), c x m. Die Winkel bzw. ihr Tangens in der a, b-Ebene werden um 1/(n x n x m) geändert, die Winkel in der c, b-Ebene um 1/(m x n x m). Bevorzugt ist eine gleichwertige Ausrichtung in beiden Achsen, d.h. bevorzugt (n x n x m) = (m x n x m), bzw. n = m, dann sind beide Faktoren n³. So würde beispielsweise mit n = 5 ein Eintrittsquerschnitt von A=4, B=25 in einen Austrittsquerschnitt von A=20, B=1 umgeformt und in beiden Achsen um den Faktor 125 ausgerichtet.

Die erzielte, definierte Ausrichtung der nicht isometrischen Partikel, sowie die definierte Verformung des Fluidelements (Ausrichtung von Makromolekülen), kann mit verschiedenen optischen und nicht optischen Messverfahren zur Bestimmung weiterer Probeneigenschaften genutzt werden. Neben der von der Farbmetrik bekannten Remissionsmessung sind andere photometrischen Anordnungen (z.B. Transmission, Laserbeugung) sowie abbildende optische Verfahren (z.B. Bildanalyse, Rückstreusonden) einsetzbar.

n und m sind der jeweilige Dehnungsgrad des Fluidelements. Die absoluten Werte für n und m sind unter anderem abhängig davon, wie stark die Verformung der Fluidelemente einer Strömung sein soll. Die Stärke der Verformung ist dabei abhängig vom Anwendungszweck und von der Größe der nicht isometrischen Partikel in der flüssigen Probe. Im Allgemeinen ist n 1,5 bis 7, bevorzugt 2 bis 5, besonders bevorzugt 3 bis 5, ganz besonders bevorzugt 4 bis 5, wobei die bevorzugten Werte insbesondere bei einem Einsatz der erfindungsgemäßen Strömungszelle in photometrischen Messeinrichtungen, insbesondere Remissionssensoren, geeignet sind. Bei einem Einsatz der erfindungsgemäßen Strömungszelle z.B. - in der Bildanalyse können andere Werte für n bevorzugt sein. m ist bevorzugt n, wie bereits vorstehend erwähnt

Gegen diese Ausrichtung wirken die thermische Bewegung, Turbulenzen und Drehkräfte bei Schergradienten. Die Turbulenzen können durch eine geeignete, durch den Fachmann bei einer gegebenen Geometrie der erfindungsgemäßen dreidimensionalen Strömungszelle problemlos zu ermittelnden Strömungsgeschwindigkeit vermieden werden. Die Drehkräfte wirken umso schwächer, je planer die Ausrichtung ist.

Bevorzugt erfolgt die erfindungsgemäße Verformung somit auf einem Weg, der kurz genug ist, um die Ausbildung eines Strömungsprofils zu minimieren, und das Abklingen der Ausrichtung durch die thermische Bewegung, aber gleichzeitig so lang, dass keine scharfen Umlenkungen der Strömung erfolgen. Auch im anschließenden parallelen Teil (der Messzone) wird die Weglänge nicht größer als nötig gewählt, um eine thermische Diffusion und Ausbildung eines Strömungsprofils zu minimieren. Der parallele Teil muss lediglich lang genug sein, um die "Messflächen" vollständig aufzunehmen, die sich aus Strahlquerschnitt und Einfallswinkel ergeben. Bevorzugt ist die Messzone 2 bis 10 mm, besonders bevorzugt 4 bis 8 mm lang. Eine vorteilhafte Variation ist eine zweite Messung im größeren Abstand, z.B. 10-20 mm, um das Ausmaß der Ausrichtungsabnahme als Produkteigenschaft zu erfassen. Statt den Abstand zu variieren, ist auch eine definierte Variation der Strömungsgeschwindigkeit zu diesem Zweck einsetzbar.

Der Ausrichtungsgrad selbst ist in erster Näherung von Dehnungsverhältnis abhängig, d.h. die Strömungsgeschwindigkeit wird so gewählt, dass noch keine Turbulenz auftritt, aber doch möglichst hoch, damit die thermische Unordnung minimiert wird und die Scherkräfte im Messspalt (Messzone) die produktberührenden Flächen sauberhalten. Bei gegebener Länge des Messspaltes (Messzone) wird eine passende Strömungsgeschwindigkeit über den Druckverlust eingestellt (0,1 bis 3 bar bevorzugt 0,5 bis 1,5 bar). Der Volumenstrom wird dann gemessen, die Strömungsgeschwindigkeit berechnet und auf Turbulenzen überprüft.

Ist die erfindungsgemäße dreidimensionale Strömungszelle Teil einer photometrischen Messeinrichtung, dann trifft die in zwei Achsen ausgerichtete flüssige Probe direkt am Ende der Dehnungszone auf das Messfenster (Messzone) der photometrischen Messeinrichtung.

Ein weiterer Gegenstand ist ein Verfahren zur Ausrichtung von nicht isometrischen Partikeln in einer flüssigen Probe, wobei die flüssige Probe eine dreidimensionale Strömungszelle gemäß der vorliegenden Anmeldung durchfließt, wobei ein Fluidelement der flüssigen Probe mit den Maßen a, b, c zu einem Fluidelement mit den Maßen a x n, b/(n x m), c x m umgeformt wird, wobei a die Breite, b die Höhe und c die Länge des Fluidelements bedeuten und m und n von der Geometrie der Strömungszelle abhängige Konstanten sind, die positive Zahlen > 1 bedeuten.

Bevorzugt sind in dem erfindungsgemäßen Verfahren 1/(n x n x m) = 1/(m x n x m). Bevorzugte Werte für n sind bereits vorstehend genannt.

Geeignete flüssige Proben mit nicht isometrischen Partikeln, sowie geeignete nicht isometrische Partikel und geeignete Strömungsgeschwindigkeiten, mit der die flüssige Probe die dreidimensionale Strömungszelle, durchfließt, sind ebenfalls bereits vorstehend genannt.

Ein weiterer Gegenstand der vorliegenden Anmeldung ist die Verwendung der erfindungsgemäßen dreidimensionalen Strömungszelle zur zweidimensionalen Ausrichtung von nicht isometrischen Partikeln in einer flüssigen Probe, bevorzugt zur Ausrichtung von nicht isometrischen Partikeln in flüssigen Pigmentpräparationen.

Die Form der Strömungszelle, umfassend eine querschnittsverformende Zulaufzone, eine Dehnungszone, eine parallel verlaufende Messzone und einen Auslauf ist vorstehend beschrieben. Der mechanische Aufbau einer solchen Strömungszelle richtet sich nach den verwendungsspezifischen Anforderungen. Für die bevorzugte Remissionsmessung ist ein besonders vorteilhafter Aufbau durch eine Planscheibe und einen dreidimensionalen Formkörper realisiert, der eine Zuströmöffnung, eine Messöffnung zum Anlegen des Messfensters und eine Austrittsöffnung besitzt. Als Material kommt bevorzugt Metall oder Kunststoff in Frage, besonders bevorzugt Edelstahl und Teflon. Diese Aufertigung verbindet reproduzierbare Präzision und leichte Reinigung.

Die Herstellung der Strömungszelle erfolgt nach dem Fachmann bekannten Verfahren z.B. durch Bohrern, Schleifen oder Fräsen des Strömungsweges in einen Block aus einem der vorstehend genannten Materialien. Des Weiteren kann die Strömungszelle durch Spritzguß hergestellt werden, wenn das Material der Strömungszelle zum Spritzguß geeignet ist.

Eine weitere vorteilhafte Fertigungstechnik ist das Pressformen von Kunststoffen, bevorzugt Teflon. Dies bedeutet, dass man mit einem geformten Stempel (Werkzeug) ein Grundvolumen in einen Block einpressen kann und die notwendige Strömungsführung durch einfache, eingelegte Verdrängerkörper erzielt. Die Verdrängerkörper sind konvex und daher unproblematisch mit konventionellen Methoden zu fertigen.

Die erfindungsgemäße dreidimensionale Strömungszelle kann überall dort eingesetzt werden, wo eine Ausrichtung von nicht isometrischen Partikeln in flüssigen Proben erwünscht ist. Bevorzugt wird die erfindungsgemäße dreidimensionale Strömungszelle in einer photometrischen Einrichtung zur Messung des Dämpfungsgrades bei der Lichtausbreitung einer flüssigen Probe enthaltend Partikel, die nicht isometrisch sind, eingesetzt. Geeignete flüssige Proben, die nicht isometrische Partikel enthalten, wurden bereits vorstehend genannt.

Ein weiterer Gegenstand der vorliegenden Anmeldung ist somit eine photometrische Messeinrichtung zur Messung des Dämpfungsgrades bei der Lichtausbreitung in einer flüssigen Probe enthaltend nicht isometrische Partikel, umfassend eine dreidimensionale Strömungszelle zur Ausrichtung der Partikel in der flüssigen Probe in zwei Achsen gemäß der vorliegenden Anmeldung.

Die dreidimensionale Strömungszelle sowie bevorzugte Ausführungsformen der Strömungszelle sowie geeignete flüssige Proben enthaltend nicht isometrische Partikel wurden bereits vorstehend genannt.

Das physikalische Prinzip einer photometrischen Messung ist die Bestimmung der von einer Lichtquelle zu einem Detektor gelangenden Lichtintensität in Abhängigkeit der Eigenschaften einer Probe, z.B. eines dispersen Systems. Je nachdem wie Lichtquelle, Probenvolumen und Detektor angeordnet und ausgeführt sind, ergeben sich verschiedene Abhängigkeiten des gemessenen Signals von der Streu- und Absorptionswirkung einer Lösung, Dispersion oder Emulsion.

Die Lichtausbreitung bzw. ihre Dämpfung ist nämlich eine Funktion der dispersen Suspensionseigenschaften, genauer gesagt der spezifischen Streuung und Absorption. Innerhalb gewisser Grenzen lässt sich von den optischen Eigenschaften auf die allgemeinen dispersen Eigenschaften zurückschließen, was in vielen Fällen die Grundlage für eine Prozesssteuerung liefern kann. Je nach Produkt ergeben sich unterschiedliche Anforderungen an die Art der Messung, was Geometrie und Größe des Messvolumens sowie die verwendeten Wellenlängen angeht, z.B. Transmission mit Infrarot oder Remission mit Weißlicht.

Im Allgemeinen kann die photometrische Messeinrichtung in drei Betriebsarten betrieben werden:

### Transmission:

Gemessen wird durch das Messvolumen hindurch tretende Licht (nur bei symmetrischer Zelle mit zwei Fenstern möglich).

### Quasi Rückstreuung:

Gemessen wird das Licht, welches infolge der diffusen Lichtausbreitung im dispersen Medium wieder in die Einstrahlrichtung zurückgestreut wird, aber in eine andere Phase eintritt (die Sensorausführung ist dem Fachmann z.B. aus EP-A 0 472 899 bekannt; plane Anbringung in der Messzone).

### Remission:

Gemessen wird das Licht, welches an der medienseitigen Grenzfläche eines den Lichtweg abschließenden transparenten Flächenelements diffus reflektiert wird, aber in der Regel nicht der Reflex der Grenzfläche selbst.

Bei Effektpigmenten hat auch die diffuse Reflexion ein Maximum in Glanzrichtung, allerdings nicht so scharf wie der Spiegelglanz der Grenzflächen.

Bevorzugt wird mit der photometrischen Messeinrichtung gemäß der vorliegenden Anmeldung die Remission gemessen, d.h. bevorzugt ist die photometrische Messeinrichtung gemäß der vorliegenden Anmeldung ein Remissionssensor. Besonders bevorzugt ist der Remissionssensor ein hochgenauer strömungsorientierter Mehrwinkel-Remissionssensor (flow oriented multi angle colour sensor; Flomacs).

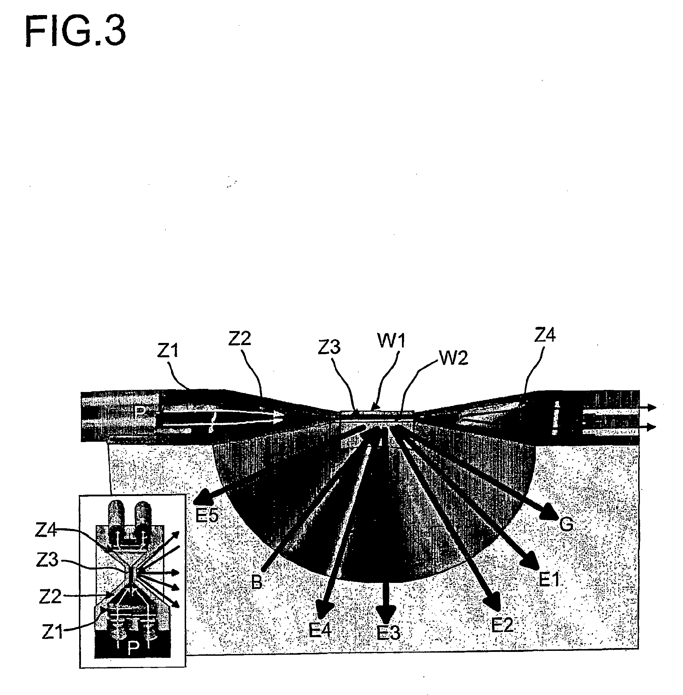

In Figur 3 ist ein Beispiel für einen Remissionssensor dargestellt.
- *Figur 3:*: *Anordnung von optischer Einheit und Probenanalyseeinheit zueinander*

Darin bedeuten:
- B: Beleuchtung (= Beleuchtungsfaser)
- G: Glanz
- E1: Empfang 1 (=Empfangsfasern)
- E2: Empfang 2
- E3: Empfang 3
- E4: Empfang 4
- E5: Empfang 5

- P: Produktströmung
- Z1: Zulaufzone
- Z2: Dehnungszone
- Z3: Messzone
- Z4: Auslaufzone

- W1: Messfenster 1
- W2: Messfenster 2

In einer bevorzugten Ausführungsform ist der Remissionssensor aufgebaut aus
a) einer optischen Einheit, die
   aa) eine Lichtquelle in Form einer Lampe, und
   ab) eine Faseroptik umfassend Lichtwellenleiter, wobei mindestens ein Lichtwellenleiter ein Referenzleiter ist,
   umfasst,
b) einer Probenanalyseneinheit, die
   ba) ein Messfenster und
   bb) eine Probenanalysenzelle mit dreidimensionaler Strömungszelle, umfasst,
   wobei auf einer Seite des Messfensters die optische Einheit angeordnet ist und auf der anderen Seite des Messfensters die Probenanalysenzelle mit dreidimensionaler Strömungszelle angeordnet ist, in dem diese so an das Messfenster angepresst ist, dass ein Spalt zwischen Messfenster und Probenanalysezelle gebildet wird, den eine zu messende flüssige Probe enthaltend nicht isometrische Partikel durchqueren muss, wobei die zu messende flüssige Probe durch die dreidimensionale Strömungszelle, die vor dem Spalt angeordnet ist, in einer speziellen Strömungsführung an den Spalt herangeführt wird,
   und
c) einer System-Kontrolleinheit, umfassend Detektoren zur Aufnahme von Messdaten und ein daran angeschlossenes Auswertegerät,
wobei mindestens eine Lichtwellenleiterverbindung von der Lichtquelle zu dem Messfenster und von dem Messfenster weiter zum Detektor geführt wird, zur Erzeugung eines Messignals (bevorzugt Remission des Produkts), und mindestens eine Referenzleiterverbindung direkt von der Lichtquelle zum Detektor oder vom Messfenster zum Detektor geführt wird, zur Erzeugung eines Referenzsignals (interner Reflex).

Bei der bevorzugt gemessenen Remission wird dabei das Licht gemessen, welches an der Grenzfläche zum Messfenster eines den Lichtweg abschließenden transparenten Flächenelements diffus reflektiert wird, aber in der Regel nicht der Reflex der Grenzfläche selbst (Glanz). Dieser bildet einen Störuntergrund, der im Allgemeinen zwischen 1% und 0,001% der Weiss-Remission liegt. Das heißt, der direkte Reflex der Beleuchtung an der Scheibe sollte nicht von der Empfangsfaser gesehen werden, die das vom Produkt gestreute Licht empfängt, da dies zu einem sehr hohen, unerwünschten Untergrundanteil führt. Der direkte Reflex kann aber sehr wohl in einer weiteren Faser empfangen werden, und kann als (zusätzliche oder einzige) Überwachung der Beleuchtungsintensität dienen.

Die Farbmetrik an sich ist Stand der Technik. Wenn diese Vorgehensweisen hier erläutert werden, dann nur, um klarzustellen, dass dieser Sensor für alle diese Methoden geeignet ist. Eine Remissionsmessung liefert zunächst das Remissionsspektrum des Produktes, das dann auf das Remissionsspektrum eines Weißstandards bezogen wird. Aus dieser normierten Remission können dann auch die häufig zur Beschreibung von Farbe verwendeten Lab-Werte berechnet werden. Eine Remissionsmessung liefert nicht unmittelbar die Deckkraft, bzw. die so genannten Absorptions- und Streuspektren einer Pigmentpräparation. Durch Vermessen der Präparation in nicht deckender Schichtstärke über Schwarz und über Weiß, bzw. durch Vermessen von Weißabmischungs- und Schwarzabmischungsreihen, können diese Werte aber ermittelt werden.

Es ergeben sich für viele Produkte erhebliche Kostenvorteile, wenn die Eigenschaften der Proben bereits an der flüssigen Präparation bestimmt werden können, insbesondere bei Lacken. Dazu ist die Messung der Remission mit der erfindungsgemäßen Messeinrichtung besonders geeignet. Im Folgenden wird der besonders bevorzugte Remissionssensor näher erläutert.

### a) optische Einheit (A)

Die optische Einheit weist erfindungsgemäß eine oder mehrere Lichtquellen sowie die gesamte Faseroptik auf.

Die Lichtquelle muss eine hinreichende Intensität und Leuchtdichte aufweisen, damit ein Spektrometer im Bereich von 50 bis 2000, bevorzugt 100 bis 600 ms Integrationszeit betrieben werden kann. Weiterhin muss das Spektrum der Lampe so beschaffen sein, dass bei Weiß alle Wellenlängen des Spektrometers bei einer Lampe ohne Korrektur mit 5 % bis 95 %, bevorzugt 10 % bis 95 % und bei einer Lampe mit Korrektur mit 25 % bis 95 % ausgesteuert sind. Dabei sind möglichst hohe Prozentzahlen (insbesondere 95 %) besonders wünschenswert. Mit Hilfe von Farb-Filtern kann das Spektrum der Lampe weiter verbessert werden. Diese Filter können nur flach verlaufende Lampenspektren "geradebiegen". Einzelne, sehr steil verlaufende Maxima, wie sie viele Gasentladungslampen in größerer Anzahl aufweisen, sind nicht korrigierbar.

Des Weiteren ist eine zeitliche und räumliche Homogenität wünschenswert. Wird eine Halogenlampe eingesetzt, wird sie bevorzugt durch Defokussierung und durch eine Streuscheibe verbessert. Der Aperturwinkel der Faser (= Lichtwellenleiter) sollte homogen "mit Licht gefüllt" sein. Die Faser sollte nicht zu stark gekrümmt sein. Alle Verbesserungs-Maßnahmen gehen zu Lasten der Intensität.

Die Lichtquelle ist eine Lampe, wobei zum Beispiel LED's, Gasentladungslampen (z.B. XBO) und Lampen mit Glühwendel geeignet sind, bevorzugt ist eine Halogenlampe. Besonders bevorzugt ist eine Lampe mit integriertem Shutter. Es ist jedoch auch möglich, andere Lampen einzusetzen, die bevorzugt ein Spektrum aufweisen, so dass eine Dynamik von ca. 3 oder kleiner erreicht wird. Gleichzeitig sollte die Lampe geringe Intensitätsschwankungen und eine genügende Helligkeit aufweisen. Die bevorzugt eingesetzte Halogenlampe weist im Allgemeinen ein stabilisiertes DC-Netzteil auf.

Besonders bevorzugt sind Lampen mit Shutterbetrieb. Bei trägen Lichtquellen wie z.B. Glühwendel (Halogen) oder Gasentladung ist dies mit einem mechanischen oder z.B. optoelektronischen Shutter (Möglichkeiten dem Fachmann bekannt) gelöst, bei schnellen Lichtquellen wie z.B. Dioden oder Blitzlampen ist dies durch die elektrische Ansteuerung realisiert.

Bevorzugt ist gemäß der vorliegenden Anmeldung eine Anordnung, worin hinter der Lampe, bevorzugt Halogenlampe, ein Kompensationsfilter angeordnet ist. Dabei ist unter "hinter der Lampe" zu verstehen, dass der Kompensationsfilter dem Verlauf des Lichtstrahls der Lampe folgend nach der Lampe angeordnet ist. Der in der bevorzugten Ausführungsform eingesetzte Kompensationsfilter linearisiert das Spektrum der Lampe so, dass der Unterschied zwischen höchster und niedrigster Intensität des von der Lampe ausgestrahlten Lichts maximal 4, bevorzugt 3 bis 4 ist und nicht, was im Stand der Technik üblich ist, 10 bis 20. Dies wird mit Mehrschichtfiltern aus handelsüblichen Filtergläsem erreicht.

In einer weiteren bevorzugten Ausführungsform ist hinter der Lampe, bevorzugt Halogenlampe, - bei Einsatz eines Kompensationsfilters, was bevorzugt ist, zwischen Lampe und Kompensationsfilter - ein IR-Sperrfilter, ein Kondensor und eine Streuscheibe angeordnet. Wiederum bedeutet "hinter der Lampe" im Sinne der vorliegenden Anmeldung dem Lichtstrahl folgend nach der Lampe. Der IR-Sperrfilter dient dazu, die Wärmebelastung, die durch die Lampe auf die Probe, die Lichtwellenleiter, den Kompensationsfilter und andere Einheiten des Remissionssensors einwirkt, zu reduzieren. Der Kondensor dient dazu, das Licht der Lampe auf den Eingang der Faseroptik zu bündeln. Die Streuscheibe dient dazu, einen strukturfreien, gleichmäßigen Verlauf der Helligkeit des Lichts der Lampe über dem Ort und dem Aperturwinkel der Lichtwellenleiter zu erreichen. Geeignete Ausführungen von IR-Sperrfiltern, Kondensoren und Streuscheiben, die für den erfindungsgemäßen Remissionssensor geeignet sind, sind dem Fachmann bekannt.

Der erfindungsgemäß bevorzugt in die Lampe integrierte Shutter ist bevorzugt ein elektromechanischer Shutter, der die Beleuchtungsfaser vollständig verdunkeln kann. Die Abdunkelung durch den Shutter dient der Messung des Dunkelstroms.

Das bedeutet, der Shutter unterbricht den Lichtstrom von der Lampe zur Beleuchtungsfaser. Das ist erforderlich, um den Dunkelstrom des Spektrometers zu messen (dieser Strom fließt immer, und führt bereits bei völliger Dunkelheit zu einer Anzeige), der vom Messwert des Produktes subtrahiert werden muss. Das Spektrometer wird durch das Auslesen gelöscht, aber nur zu etwa 99 %, so dass ein Rest der letzten Messung im Spektrometer verbleibt, und die erste Dunkelmessung verfälscht. Ab der zweiten aufeinanderfolgenden Dunkelmessung ist der Wert dann unverfälscht.

Die Faseroptik des erfindungsgemäßen Remissionssensors umfasst je nach Ausführung Lichtwellenleiter (= Fasern). Diese Fasern sind eine oder mehrere Referenzfaser(n), mehrere Empfangsfaser(n) und eine oder mehrere Beleuchtungsfaser(n). Es sind grundsätzlich auch Ausführungsformen möglich, die keine Referenzfaser(n) aufweisen. Üblicherweise umfasst die Faseroptik jedoch mindestens eine Referenzfaser. Die mindestens eine Referenzfaser führt im Allgemeinen direkt von der Lichtquelle (Aa) zum Detektor (Ca). Es ist jedoch auch möglich, dass mindestens eine Referenzfaser vom Messfenster (Ba) zum Detektor (Ca) führt.

Grundsätzlich besteht die Remissionsoptik somit aus Lichtwellenleitern (Fasern), gegebenenfalls Linsen, Blenden, Streuscheiben, und einem gemeinsamen Frontelement, das sowohl vom Licht der Beleuchtungsfaser durchdrungen wird, als auch vom Licht, das das Produkt zurückstreut (Remission), auf dem Wege zur Empfangsfaser. Dieses Frontelement ist vorteilhafterweise eine plane Scheibe aus transparentem Material, ist aber prinzipiell auch als Prisma, Linse, Stab, Zylinder oder Faser realisierbar, im Extremfall sogar als Luftpolster mit oder ohne Folie.

Da das Spektrometer selbst in der Regel eine kurze Empfangsfaser aufweist, kann das Spektrometer in einer weiteren Ausführungsform direkt, ohne Einsatz weiterer Lichtwellenleiter, an den Detektor angeschlossen werden.

Die üblicherweise eingesetzten Fasern haben materialbedingt einen Öffnungswinkel von +-10-15° (divergent). Durch Blenden und Linsen kann man den Strahlengang zu anderen Querschnitten und zu anderen divergenten oder konvergenten Öffnungswinkeln umformen. Damit ist es möglich, einen Messfleck definierter Größe mit einem Strahlengang mit geringerem Öffnungswinkel (0,5° - 5°, bevorzugt 1° - 3°, besonders bevorzugt um 2°) zu beleuchten und zu beobachten. Der von der Grenzfläche reflektierte Glanz hat den gleichen Öffnungswinkel wie die Beleuchtung und wird von einer Beobachtungsoptik nicht mehr empfangen, wenn der Winkel zwischen Glanzwinkel und Beobachtungswinkel größer als die Summe der Aperturwinkel ist. Wegen der begrenzten Leuchtdichte der Fasern und der Größe der Messflecken muss noch ein Unschärfezuschlag beim Differenzwinkel berücksichtigt werden. Im Beispiel von +-2° Öffnungswinkel, 800/600µm Faserdurchmesser, 10 mm Linsen mit 15 mm Brennweite, 3 mm Messfleck, 5 mm Beleuchtungsfleck und 70 mm Arbeitsabstand kann man ab etwa 10° Differenzwinkel messen. Der Öffnungswinkel wird entweder durch Blenden oder den Linsendurchmesser begrenzt. Der kreisförmige Strahlquerschnitt wird durch die Neigung zu einem ovalen Fleck auseinander gezogen (1/cos(Winkel)). Es ist also darauf zu achten, dass bei größeren Winkeln die Messflecken noch vollständig im Beleuchtungsfleck liegen. Vorteilhaft ist ein Sicherheitsabstand von 1-2 mm.

Es wurde gefunden, dass die Konzentrationsabhängigkeit bei geringen Eindringtiefen gering ist, wenn der Beleuchtungsfleck größer als der Messfleck (kompatibel mit einer erfindungsgemäßen kurzen Scherspaltlänge) gemacht wird. Bevorzugt ist der Beleuchtungsfleck daher größer als der Messfleck. Besonders bevorzugt ist der Durchmesser des Beleuchtungsflecks 4 bis 20 mm, besonders bevorzugt 5 bis 10 mm und der Durchmesser des Messflecks 1 bis 10 mm, besonders bevorzugt 2 bis 5 mm. Somit eignet sich der erfindungsgemäße Remissionssensor insbesondere für exakte Remissionsmessungen an flüssigen Pigmentpräparationen.

Die Lichtwellenleiter sind bevorzugt Fasern mit 100, 200, 400, 600 oder 800 µm Faserdurchmesser oder Faserbündel, z.B. am Spektrometer fest montiert. Besonders bevorzugt weist die als Referenzleiter eingesetzte Faser einen angepassten, bevorzugt kleineren Durchmesser auf als die übrigen Lichtwellenleiter, da die eingesetzte Lampe, bevorzugt Halogenlampe, selbst eine hohe Lichtintensität aufweist.

Um hochgenaue Messgenauigkeiten zu erzielen, sind die Lichtwellenleiter in einer bevorzugten Ausführungsform des erfindungsgemäßen Verfahrens mechanisch geschützt. Zum mechanischen Schutz werden die Lichtwellenleiter in Schutzschläuchen geführt und sind auf voller Länge mittels eines Stützgestells gestützt. Die Schutzschläuche sind im Allgemeinen aus üblichen, dem Fachmann bekannten Materialien, zum Beispiel Metall oder Polymer. Das Stützgestell ist bevorzugt ein Metallgestell, an dem die Lichtwellenleiter mittels üblichen Befestigungsmaterialien, zum Beispiel Kabelbindern oder Klebeband befestigt sind.

Der Referenzleiter wird in einer bevorzugten Ausführungsform des erfindungsgemäßen Remissionssensors über ein Dämpfungselement, d.h. ein präzises Abstandselement mit eingebauter Streuscheibe, um den vollen Aperturwinkel zu erhalten, geführt.

Die Beleuchtung und Beobachtung der probenseitigen Grenzfläche des Messfensters erfolgt im Allgemeinen durch die oben beschriebenen Faseranordnungen, d.h. im Schnittpunkt der optischen Achsen der Fasern (bevorzugt unter Berücksichtigung des Versatzes dieser Achse beim Eintritt in das Messfenster). Wie beschrieben, wird der "natürliche" Strahlengang einer Faser (Lichtwellenleiter) bevorzugt durch optische Elemente umgeformt, um einen Beleuchtungs- bzw. Messfleck mit den gewünschten Eigenschaften zu erzielen (Größe und Homogenität des Flecks, Aperturwinkel des Strahlengangs). Bei der Auslegung sind folgende Überlegungen anzustellen:

Der Beleuchtungsstrahl wird an der inneren (ggf. entspiegelten) und an der probenseitigen Grenzfläche des Messfensters geometrisch (d.h. gerichtet) reflektiert. Der Reflexionswinkel wird in der Farbmetrik Glanzwinkel genannt. In diesen Reflexen steckt keine Information über die Remission der Probe.

Wenn die Metallic- und Effektpigmente parallel zum Messfenster ausgerichtet sind (analog zu einer Ausrichtung parallel zur Lackoberfläche in einem applizierten Lack), erfolgt eine anisotrope Streuung, die sehr unterschiedlich ausgeprägt sein kann. Die maximale Remission erfolgt ebenfalls im Glanzwinkel, d.h. die Reflexion der Grenzfläche und der Pigmente überlagern sich im Glanzwinkel. Bei größeren Winkeln zum Glanzwinkel nimmt die Remission in alle Richtungen, aber nicht im gleichen Maße ab.

Die Reflexe haben dagegen genau den Strahlquerschnitt und den Aperturwinkel der Beleuchtung. Man kann sie deshalb durch entsprechend winkelselektive Beobachtung ausblenden und die Remission der Probe (enthaltend nicht isometrische Partikel) nahe am Glanz messen. In der Trockenfarbmetrik (Stand der Technik) ist dies in der Regel ein Winkel von 15° vom Glanz zur Beleuchtung hin. Möglich sind im Prinzip beliebig kleine Winkel, aber nicht exakt 0°. Technisch sinnvoll realisierbar sind Winkel ab etwa 5° vom Glanzwinkel weg (unabhängig, in welche Richtung).

Ferner misst man auch bei größeren Winkeln zum Glanz, und auch bei steileren (kleineren) oder flacheren (größeren) Beleuchtungswinkeln. Es ist stets dafür zu sorgen, dass der durch den flachen Einfallswinkel verbreiterte Beleuchtungs- oder Messfleck noch in der dafür geeigneten Messzone bleibt.

Darüber hinaus ist bei der Messung an flüssigen Proben, wie beschrieben, bevorzugt unter Verwendung einer Planscheibe, der gut handhabbare Winkelbereich auch durch die bei flachen Winkeln zunehmenden Reflexionen (bis hin zur Totalreflexion) eingeschränkt.

Beispiele für die Auswahl sinnvoller Winkel sind weiter unten ausgeführt.

Es ist somit im Allgemeinen erforderlich, die große Dynamik zwischen glanznahen und glanzfernen Beobachtungswinkeln (FLOP genannt), die den Faktor 200 erreichen kann, durch eine variable oder feste Intensitätsanpassung (mittels Filter, Dämpfer und/oder Streuscheibe) der einzelnen Kanäle zu optimieren, um in allen Kanälen eine gute Aussteuerung zu erzielen. Alternativ bzw. zusätzlich kann die Messung bei zwei oder mehr verschiedenen Integrationszeiten erfolgen, wobei dann die Lichtquelle bevorzugt über zwei oder mehr unterschiedliche Beobachtungsstrahlengänge überwacht wird, um die Referenzintensität mit ausreichender Aussteuerung zu messen. Mehrere parallele Referenzfasern mit eigenen Spektrometern sind eine mögliche Ausführung, mehrere parallele Referenzfasern mit eigenem Shutter, die dann auf ein Spektrometer zusammengeführt werden, eine andere Alternative.

Die hier beschriebenen bevorzugten Ausführungen können in ihrem Übersprechverhalten verbessert werden, wenn die produktabgewandte Seite des Messfensters entspiegelt wird, was bevorzugt erfolgt. Dies ist auch vorteilhaft, um die Reflexionen bei den flachen Beobachtungswinkeln zu minimieren.

Grundsätzlich sind in dem erfindungsgemäßen Remissionssensor verschiedene Faseranordnungen denkbar. Bevorzugte Faseranordnungen können vom Fachmann anhand der folgenden Kriterien ermittelt werden, wobei zu berücksichtigen ist, dass die flüssige Probe nicht isometrische Partikel enthält:
A) Lichtempfindlichkeit: diese wirkt sich auf die erforderliche Integrationszeit des Sensors aus. Da die Lichtleistung der Lampe begrenzt ist, der Faserdurchmesser auch und die Empfindlichkeit des Sensors ebenfalls, sind Integrationszeiten zwischen 50 und 2000 ms typisch. Wünschenswert sind 100 bis 600 ms. Längere Integrationszeiten als 2000 ms sind ungünstig, da dann der Dunkelstromanteil ansteigt, und der Signalfehler zunimmt. Die sich ergebende längere Messzeit (erst recht, wenn die Messung zur Minimierung des Fehlers mehrfach wiederholt wird) ist ungünstig. Das Kühlen des Sensors, um den Dunkelstrom zu senken, ist sehr aufwendig.
B) Stabilität: Eine Reproduzierbarkeit von 0,05 bis 0,2 % der Remission ist besonders bevorzugt. Je nach Farbe entspricht dies einem dE von 0,02 bis 0,08. (Mit dem im Stand der Technik bekannten Remissionssensoren wird bei der Messung flüssiger Proben eine Reproduzierbarkeit von 1 bis 10 % erreicht.) Die Zeitskala ist dabei im Minutenbereich, d. h. die Abweichung zwischen zwei unmittelbar aufeinanderfolgenden Messungen (mit dem gleichen Produkt, oder im Vergleich zum Produkttyp), oder der zeitliche Abstand zwischen zwei Kalibrierungen (z. B. 24 Stunden), sowie die Langzeitstabilität durch wiederholte Kalibrierung. Kritische Faktoren sind hierbei die Alterung der optischen Teile und Fasern, mechanische Verschiebungen, Schrumpfen und Quellen der Werkstoffe, Kriechvorgänge und Ermüdung durch thermische Wechsellast, Wiederholbarkeit mechanischer Positionierungen beim Kalibrieren, Altern und Austausch der Lichtquelle, Abnutzung der produktberührten Fläche. Die verschiedenen Geometrien sind gegenüber diesen Faktoren nicht in gleichem Maße empfindlich.
C) Übersprechdämpfung: Hiermit ist zum Einen die unkontrolliert von der Lichtquelle zu der Empfangsfaser gelangende Lichtmenge gemeint, wenn ein ideal schwarzes Produkt an der Frontscheibe (Messfenster) anliegt, im Verhältnis zur Lichtmenge, die das Referenzweiß (100 %, z. B. Weißstandard, Weißpaste) remittiert. Hier sind Verhältnisse von 10 % (10⁻¹) bis hin zu 0,01 % (10⁻⁴) oder besser erzielbar. Dunkle Produkte liegen auf etwa 1 % Remission. Der Untergrund kann zwar rechnerisch subtrahiert werden, dies geht aber zu Lasten der Genauigkeit. Bevorzugt sind Übersprechdampfungen, die ab Faktor 30, bevorzugt ab Faktor 100 unter der Remission des Produktes liegen. Zum Anderen ist auch die "Auflösung" des Flops gemeint, d.h. das in eine Richtung gestreute Licht darf nicht über unkontrollierte Reflexion in Faseroptiken gelangen, die das Licht aus einem anderen Winkelbereich detektieren sollen.
D) Konzentrationsabhängigkeit: Die Farbmetrik für Lacke und Pigmentpräparation ist in gewissen Grenzen unabhängig von der Konzentration der Pigmente. Dies gilt so lange, wie die geprüfte Schichtdicke deckend ist. Bei konventionellen Farbmessgeräten liegt im üblichen Anwendungsbereich bei deckenden Produkten keine Konzentrationsabhängigkeit vor, d. h. keine Abhängigkeit der Remission von der Eindringtiefe. Manche hier beschriebenen Geometrien zeigen überraschenderweise bereichsweise eine Konzentrationsabhängigkeit.

Die Faseranordnung (Remissionsgeometrie) wird im Allgemeinen gestaltet, indem ein Frontelement als Ausgangspunkt einer optischen Anordnung festgelegt wird. Das Frontelement ist in dem erfindungsgemäßen Remissionssensor das Messfenster Maßgeblich sind im Allgemeinen Material, Brechungsindex, Dicke und Planität des Messfensters. Sinnvoll sind Dicken des Messfensters von im Allgemeinen 1 bis 20 mm, bevorzugt 4 bis 10 mm, besonders bevorzugt 6 bis 8 mm. Bevorzugt ist der Durchmesser 40 bis 100 mm, besonders bevorzugt 50 bis 80 mm. Als Material eignen sich alle optisch transparenten Materialien z. B. Glas (Quarz), Halbedelsteine (Saphir) oder Diamant. In dieser Reihe ist günstig die zunehmende Härte, ungünstig der zunehmende Preis und der zunehmende Brechungsindex (mehr Reflexe). Für alle ist eine interne Antireflexbeschichtung vorteilhaft. Die Mittelsenkrechte des Messfensters (der Platte) bildet ein Bezugssystem (Plattenachse).

In einer Ausführungsform des erfindungsgemäßen Remissionssensors wird nur in einem Winkel beleuchtet und unter mehreren Remissionswinkeln, bevorzugt drei bis sieben, gemessen. Besonders bevorzugt wird mit mehreren, bevorzugt drei bis sieben, Spektrometern simultan gemessen, sowie einem Spektrometer zur Referenzierung der Lichtquelle. Das heißt, die Faseroptik weist in dem erfindungsgemäßen Remissionssensor in einer Ausführungsform eine Beleuchtungsfaser und mehrere, bevorzugt drei bis sieben, Empfangsfasern auf.

Alle einer Beleuchtungsrichtung zugeordneten Fasern (Empfangsfasern, Beleuchtungsfaser) liegen in einer Ebene, die auf dem Messfenster senkrecht steht, da die Ausrichtung parallel zum Messfenster erfolgt. Anders als bei einem Remissionssensor für isometrische Pigmente kann diese Ebene also nicht zum Messfenster hin geneigt werden, um die Übersprechdämpfung zu verbessern. Diese ist also alleine durch die Begrenzung der Aperturwinkel und die Reduzierung des internen Reflexes eingestellt. Frei gewählt werden kann der Winkel dieser Ebene zur Strömungsrichtung. Der Winkel 90° (d.h. quer) ist bevorzugt, da hiermit der Mess- bzw. Beleuchtungsfleck quer zur Strömungsrichtung auseinandergezogen wird, und die Scherkante so recht kurz bleiben kann.

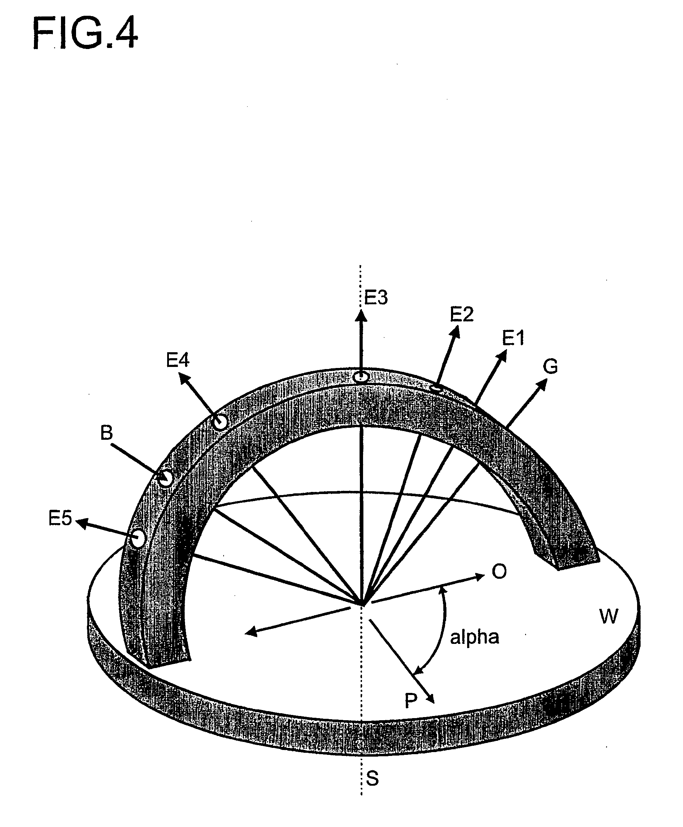

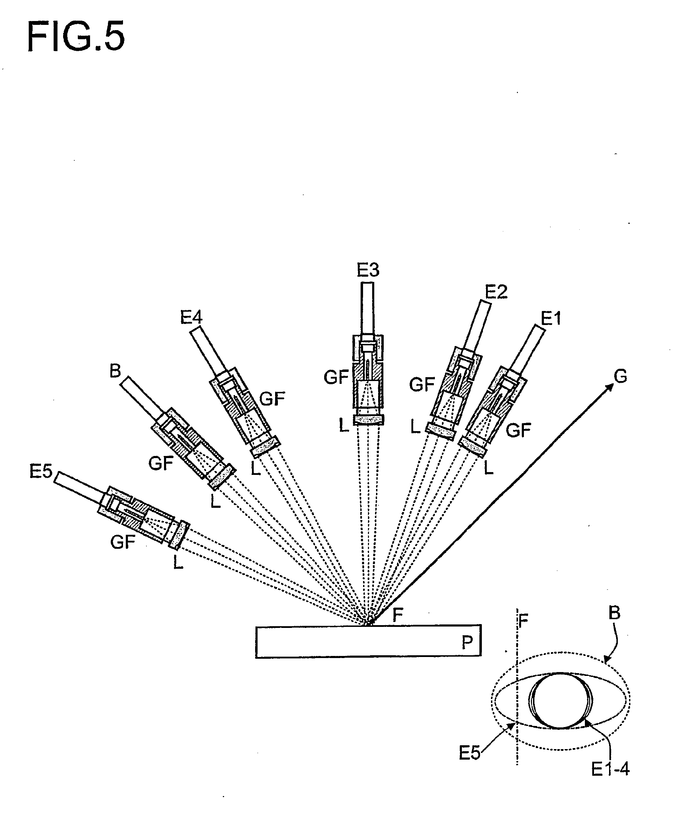

Ein Beispiel für eine solche Optik ist in Figur 4 dargestellt. Ein Beispiel für den dazugehörigen Strahlengang ist in Figur 5 dargestellt.
- *Figur 4:*: *Optik, bei Beleuchtung unter einem Winkel und Messung unter mehreren Remissionswinkeln*

Darin bedeuten:

| | | Winkel zum Glanz | Winkel zur Senkrechten |
|---|---|---|---|
| B | Beleuchtung | 90° | 45° |
| G | Glanz | 0° | -45° |
| E1 | Empfang 1 | 15° | -30° |
| E2 | Empfang 2 | 25° | -20° |
| E3 | Empfang 3 | 45° | 0° |
| E4 | Empfang 4 | 75° | 30° |
| E5 | Empfang 5 | 105° | 60° |

- W: Messfenster
- S: Senkrechte zur Platte/zum Messfenster
- O: optisch Achse
- P: Produktströmung
- alpha: Winkel zwischen optischer Achse und Produktströmung

- *Figur 5:*: *Strahlengang bei Beleuchtung unter einem Winkel und Messung unter mehreren Remissionswinkeln*

Darin bedeuten:

| | | Winkel zum Glanz | Winkel zur Senkrechten |
|---|---|---|---|
| B | Beleuchtung | 90° | 45° |
| G | Glanz | 0° | -45° |
| E1 | Empfang 1 | 15° | -30° |
| E2 | Empfang 2 | 25° | -20° |
| E3 | Empfang 3 | 45° | 0° |
| E4 | Empfang 4 | 75° | 30° |
| E5 | Empfang 5 | 105° | 60° |

- F: Fokus
- P: Produktströmung
- L: Linse
- GF: Glasfaser

Dies ergibt, dass bevorzugt unter 45° zur Senkrechten beleuchtet wird, und unter verschiedenen Winkeln, also -40° bis -30° (nah am Spiegelglanz), im Bereich -20° bis +30°, aber auch unter relativ flachen Winkeln wie 55° bis 65° beobachtet wird. Um eine hohe Winkelauflösung zu erzielen, ist es ferner vorteilhaft, den Aperturwinkelbereich der Fasern von +/-12° durch Optiken auf maximal +/-5, bevorzugt maximal +/-2 oder weniger einzustellen. Dabei lassen sich mit gängigen Fasern im Bereich 100 bis 800 µm und üblichen Linsen mit 10-15 mm Durchmesser (Bereich 2 bis 40 mm) Messflecken im Bereich 1 bis 10 mm erzielen, was mit der Verwendung der erforderlichen Scherspaltes kompatibel ist.

In einer weiteren bevorzugten Ausführungsform erfolgt die Remissionsmessung bei verschiedenen (mehreren) Beleuchtungswinkeln. Bevorzugt weist der erfindungsgemäße Remissionssensor somit eine Mehrwinkelmesseinrichtung auf, wobei die Remission unter mehreren Beleuchtungswinkeln gemessen werden kann (Mehrwinkelremissionssensor).

Bei der Realisierung mehrerer Beleuchtungswinkel an einer Analysenzelle kann es aus Platzmangel nötig sein, jeder Beleuchtungsrichtung eine eigene Ebene, d.h. verschiedene Winkel zur Strömungsrichtung zu geben. In diesem Fall ist es vorteilhaft, wenn die Strömungsrichtung die Winkelhalbierende zu den beiden Ebenen bildet. Die Winkel liegen vorteilhaft im Bereich +/-20° bis +/-70°, besonders bevorzugt +/-50° bis +/-60°.

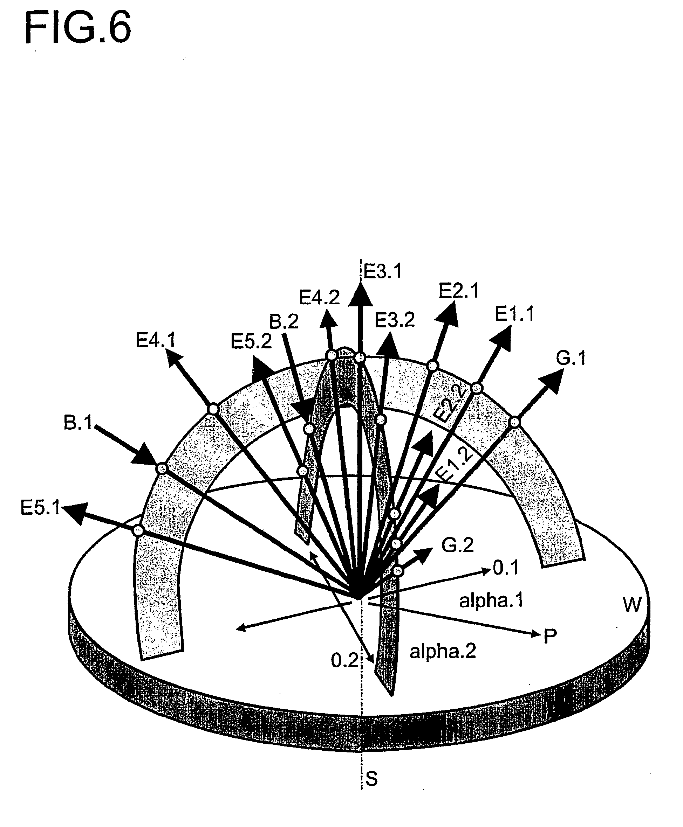

Ein Beispiel für eine solche, Optik ist in Figur 6 dargestellt.
- *Figur 6:*: *Optik bei Beleuchtung unter mehreren Beleuchtungswinkeln*

Darin bedeuten:

| | | Winkel zum Glanz | Winkel zur Senkrechten |
|---|---|---|---|
| Beobachtungsgruppe 1 | | | |
| B.1 | Beleuchtung | 90° | 45° |
| G.1 | Glanz | 0° | -45° |
| E1.1 | Empfang 1 | 15° | -30° |
| E2.1 | Empfang 2 | 25° | -20° |
| E3.1 | Empfang 3 | 45° | 0° |
| E4.1 | Empfang4 | 75° | 30° |
| E5.1 | Empfang 5 | 105° | 60° |
| | | | |

| Beobachtungsgruppe 2 | | | |
|---|---|---|---|
| B2 | Beleuchtung | 120° | 60° |
| G2 | Glanz | 0° | -60° |
| E1.2 | Empfang 1 | 15° | -45° |
| E2.2 | Empfang 2 | 25° | -35° |
| E3.2 | Empfang 3 | 45° | -15° |
| E4.2 | Empfang 4 | 75° | 15° |
| E5.2 | Empfang 5 | 105° | 45° |

- W: Messfenster
- S: Senkrechte zur Platte/Messfenster
- O1: optisch Achse Beobachtungsgruppe 1
- O2: optisch Achse Beobachtungsgruppe 2
- P: Produktströmung
- alpha1: Winkel zwischen optischer Achse 1 und Produktströmung
- alpha2: Winkel zwischen optischer Achse 2 und Produktströmung

Einige besonders vorteilhafte Ausführungsformen eines Aufbaus eines Remissionssensors, mit dem mehrere Beleuchtungswinkel (und mehrere Empfangswinkel) realisiert werden, sind im Folgenden diskutiert.
I. Um eine Messung von flüssigen Proben enthaltend nicht isometrische Partikel bei verschiedenen Beleuchtungswinkeln durchzuführen, ist es möglich, in mehreren Messzellen mit jeweils einem Remissionssensor, die parallel oder sequentiell von der Probe durchströmt werden, zu messen.
II. Es ist jedoch kostengünstiger, mehrere Beleuchtungswinkel in einer Messzelle (Remissionssensor), d.h. mit einer einzigen optischen Einheit, zu realisieren. Dies ist mit mehreren einzelnen Lichtquellen oder Mehrfachlichtquellen (Shutter sind sowieso bevorzugt vorhanden) und einer entsprechenden Anzahl von Empfangswegen und Spektrometern möglich. Eine wesentliche Verlängerung der Messzeit kann dabei dadurch vermieden werden, dass die Messungen so durchgeführt werden, dass alle Spektrometer ihren Dunkelstrom gleichzeitig bestimmen. In weiteren Ausführungsformen ist es möglich, dass die Lichtwege in mehreren - sich kreuzenden - Ebenen angeordnet werden und/oder einzelne Empfänger mehrfach genutzt werden.

Möglich ist auch die sequentielle Einschaltung verschiedener Beleuchtungspfade mit unterschiedlichen Winkeln und die Messung unter einem Beobachtungswinkel, oder Kombinationen dieser Methoden.

Grundsätzlich sind bei einer erfindungsgemäßen Mehrwinkelmesseinrichtung verschiedene Varianten denkbar, z.B. Beleuchtungswinkel < 45° bis zu Beleuchtungswinkeln von maximal 65° (zur Senkrechten), bevorzugt maximal 60°, und Winkel der Empfangsfasern ab ca. 10° vom Glanz bis maximal 65° (zur Senkrechten), bevorzugt maximal 60°.

Unter Beachtung dieser Zusammenhänge kann das Optimum für eine Anwendung in einfacher Weise durch den Fachmann experimentell ermittelt werden.

Zum Anschluss der Lichtwellenleiter (= Fasern) an die Lichtquelle und den Detektor werden im Allgemeinen handelsübliche SMA-Stecker verwendet.

In einer besonders bevorzugten Ausführungsform weist die erfindungsgemäße photometrische Messeinrichtung, bevorzugt ein Remissionssensor, zusätzlich mindestens eines der folgenden Merkmale auf:
ac) hinter der Lampe ist ein Kompensationsfilter angeordnet, der das Spektrum der Lampe so linearisiert, dass der Unterschied zwischen höchster und niedrigster Intensität des von der Lampe ausgestrahlten Lichts möglichst klein, zum Beispiel maximal Faktor 4 ist,
ad) hinter der Lampe - bei Einsatz eines Kompensationsfilters zwischen Lampe und Kompensationsfilter - ist ein IR-Sperrfilter, ein Kondensator und eine Streuscheibe angeordnet,
ae) die Lichtwellenleiter werden in Schutzschläuchen geführt und auf voller Länge mittels eines Stützgestells gestützt,
af) der Referenzleiter wird über ein präzises Abstandselement mit eingebauter Streuscheibe geführt, und definiert abgeschwächt.

Die einzelnen Merkmale gemäß ac), ad), ae) und af) wurden vorstehend bereits präzisiert. Besonders bevorzugt weist die erfindungsgemäße photometrische Messeinrichtung, bevorzugt ein Remissionssensor, zusätzlich mindestens die Merkmale ac) und ad) auf, ganz besonders bevorzugt mindestens die Merkmale ac), ad) und ae) und insbesondere die Merkmale ac), ad), ae) und af).

### b) Probenanalyseeinheit (B)

Die Probenanalyseeinheit umfasst ein Messfenster und eine Probenanalysezelle mit einer dreidimensionalen Strömungszelle.

Das Messfenster ist im Allgemeinen eine Planplatte. Für die Planplatte geeignete Materialien sind alle optisch transparenten Materialien, zum Beispiel Glas (Quarz), Halbedelsteine (Saphir) sowie Diamant. Die Planplatte weist im Allgemeinen eine Dicke von 1 bis 20 mm, bevorzugt 4 bis 10 mm, besonders bevorzugt 6 bis 8 mm und einem Durchmesser von im Allgemeinen 40 bis 100 mm, bevorzugt 50 bis 80 mm. Die Planplatte wird in einen Block, bevorzugt einen Metallblock, zum Beispiel aus Titan oder Edelstahl, druck- und lösungsmittelfest eingefügt. Dazu wird die Planplatte zum Beispiel eingeklebt oder mit einer anderen Fügetechnik in den Block eingesetzt. In einer Ausführungsform der vorliegenden Erfindung wird eine Planplatte aus Saphir mit Gold bedampft zur druck- und lösungsmittelfesten Einfügung. Das Messfenster selbst steht bevorzugt um einige µm, im Allgemeinen 0 bis 100 µm, bevorzugt 0 bis 50 µm, besonders bevorzugt 10 bis 20 µm vor. Das Messfenster steht im Allgemeinen senkrecht, so dass eine einfache Befüllung der Probenanalyseeinheit mit der flüssigen Probe, enthaltend nicht isometrische Partikel, die zuvor die dreidimensionale Strömungszelle durchquert hat, und ein einfacher Ablauf von Lösungsmittel möglich ist. Das Messfenster ist bevorzugt rund. Bevorzugt bildet der Metallblock eine Tropfkante aus, um gezielt Tropfen aus den eingesetzten flüssigen Proben an dieser. Stelle zu bilden, damit diese nicht an empfindliche Stellen des Remissionssensors gelangen.

Auf der anderen Seite des Messfensters (d.h. auf der anderen Seite des Messfensters als die optische Einheit) ist die Probenanalysezelle angeordnet, indem diese so an das Messfenster angepresst wird, dass ein Spalt zwischen Messfenster und Probenanalysezelle gebildet wird, den eine zu messende flüssige Pigmentpräparation durchqueren muss, wobei bei der Durchquerung des Spalts eine Scherung der Probe erfolgt. Die Scherung wird bevorzugt dadurch erzielt, dass der Druckverlust in dem Spalt bevorzugt 0,1 bis 3 bar auf 1 bis 15 mm Länge, besonders bevorzugt 0,5 bis 1,5 bar auf 2 bis 8 mm Länge beträgt. Dadurch, dass die Probenanalysezelle auf einer Seite des Messfensters angepresst (und abnehmbar) ist, lässt sich die optische Einheit sowie gegebenenfalls das Messfenster leicht reinigen und kalibrieren.

Die Probenanalysezelle ist bevorzugt ein Block, aus dem das vorstehend beschriebene dreidimensionale Strömungsvolumen herausgearbeitet wurde, bzw. der durch die vorstehend beschriebenen Fertigungsmethoden gebildet wurde.

Eine besonders wichtige Dimension ist die Spalthöhe des Scherspaltes, d.h. die Höhe der Messzone. Diese Abmessung wirkt sich auf drei wichtige Eigenschaften aus:
i) den Ausrichtungsgrad (Maße der Messzone, siehe Diskussion der Maße a, b, c, n, m)
ii) die Scherbeanspruchung (Sauberhaltung der Messfenster, der Druckverlust ist proportional zur Probenviskosität und zur Länge der Messzone, und näherungsweise umgekehrt proportional zum Quadrat der Spalthöhe)
iiia) Bei Messungen in Remission muss die Schichtdicke zwar nicht deckend sein, es ist allerdings wesentlich einfacher und genauer, wenn diese Randbedingung eingehalten wird (so auch bei der Trockenfarbmetrik üblich). Die Deckkraft beträgt bevorzugt > 96 %, besonders bevorzugt > 99 %. Je nach Probeneigenschaften ergeben sich daraus die Mindestschichtdicken (und somit die Spalthöhe). Bei den meisten Produkten liegen diese zwischen 0,2 und 2,5 mm, meist zwischen 0,5 und 1,5 mm.
iiib) Bei Messungen in Transmission muss die Schicht so dünn sein, dass noch eine gut handhabbare Lichtmenge durchtreten kann. Für die Bildanalyse oder Extinktionszähler sollte mehr als 50 % des Lichtes durchtreten, für integrale Transmissionsmessungen sollte die Transmissionschicht (und somit die Spalthöhe) zwischen 0,02 und 0,5 mm liegen, bevorzugt zwischen 0,05 und 0,2 mm. Die Obergrenze ist hierbei unkritisch, die Untergrenze dagegen schon, da Schichtdicken unter 0,05 mm schwer handhabbar sind.
iiic) Bei anderen Messungen kann die Schicht in der Regel alleine nach den Kriterien 1 und 2 ausgelegt werden.

Die Spalthöhe beträgt somit im Allgemeinen zwischen 0,05 und 5 mm, bevorzugt zwischen 0,2 und 2,5 mm, besonders bevorzugt zwischen 0,5 und 1,5 mm.

Gemäß der vorliegenden Erfindung wird die flüssige Probe enthaltend nicht isometrische Partikel in einer speziellen Stömungsfürung an den Scherspalt (= Messzone) herangeführt. Diese spezielle Strömungsführung wird dadurch erzielt, dass die flüssige Probe eine dreidimensionale Dehnungszone gemäß der vorliegenden Anmeldung, und eine daran anschließende Messzone (Scherspalt) durchquert. Bei der Durchquerung erfolgt eine Ausrichtung der Partikel in zwei untereinander orthogonalen Richtungen, die beide parallel zum Messfenster laufen. Dabei wird ein Fluidelement der flüssigen Probe mit den Massen a, b und c einem Fluidelement mit den Massen a x n, b/(n x m) und c x m umgeformt, wobei a die Breite, b die Höhe und c die Länge des Fluidelements bedeuten und n und m von der Geometrie der Strömungszelle abhängige Konstanten sind, die positive Zahlen 1 bedeuten. Bevorzugte Ausführungsformen der dreidimensionalen Strömungszelle und Werte für n und m wurden bereits vorstehend genannt. Bei der Auswahl der Querschnitte und Dehnungskoeffizienten (a, b, c, n, m) ist ein geeigneter Scherspalt (= Messzone) einzustellen.

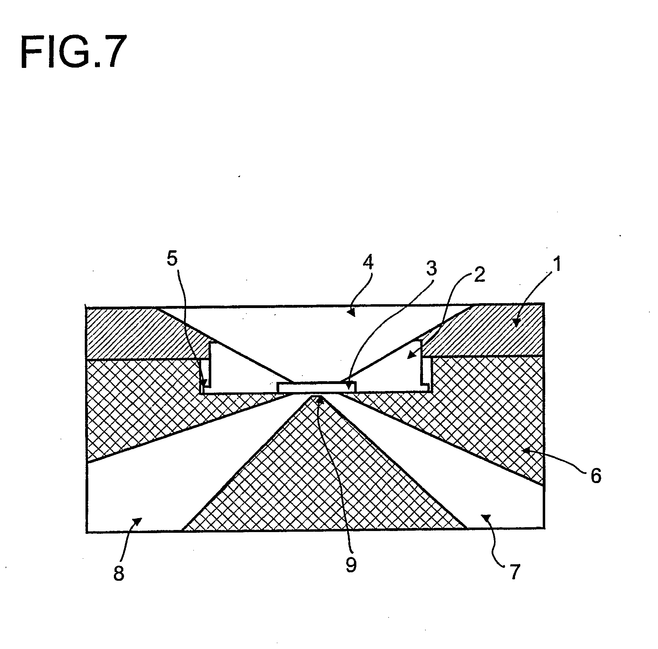

In Figur 7 ist eine bevorzugte Ausführungsform eines Remissionssensors mit einer Probenanalyseeinheit zur Remissionsmessung an flüssigen Proben enthaltend nicht isometrische Partikel umfassend das Messfenster und die Probenanalysezelle mit dreidimensionaler Strömungszelle sowie eine Halterung für die Faseroptik der optischen Einheit dargestellt.
- Figur 7:: Remissionssensor mit dreidimensionaler Strömungszelle zur Messung flüssiger Proben enthaltend nicht isometrische Partikel

Darin bedeuten:
- 1: Grundplatte (Montageplatte)
- 2: Halterung Messfenster
- 3: Messfenster
- 4: Öffnung für Fasersystem
- 5: Tropfkante
- 6: Grundkörper Produktzelle
- 7: Produkt Auslauf
- 8: Produkt Zulauf mit spezieller dreidimensionaler Form zur Ausrichtung
- 9: Scherspalt

Die Abdichtung der Probenanalysezelle gegen die optische Einheit kann nach allen dem Fachmann bekannten Methoden erfolgen. Die erhebliche Scherung des Produktes in dem Scherspalt ist ein wesentlicher Faktor, sowohl um einen definierten Probenzustand zu erhalten, d.h. durch diese Scherung werden Agglomerate von z.B. Pigmentpartikeln aufgelöst, als auch um eine Selbstreinigung des Messfensters zu erzielen, das durch die starke Scherung der Probe ständig von gegebenenfalls am Messfenster hängengebliebenen Partikeln befreit wird.

Ein besonderer Vorteil dieser Selbstreinigung des Messfensters ist, dass diese auch während der Messung aktiv ist, so dass ein häufiges An- und Ausschalten des Remissionssensors zu Reinigungszwecken nicht erforderlich ist. Nur, wenn die Selbstreinigung bei speziellen Produkten nicht ausreicht, kann zusätzlich eine mechanische Reinigung des Messfensters erfolgen, zum Beispiel indem ein Wischer, bevorzugt ein Teflonstreifen, in den Spalt geschoben wird.

Um einen definierten Probenzustand aufrecht zu erhalten und damit vergleichbare Messdaten zu erzielen, ist eine konstante Scherung der Probe erforderlich. Diese wird bevorzugt durch kontinuierliche Überwachung des Eingangsdrucks, d.h. des Drucks an der Eingangsstelle der flüssigen Pigmentpräparation in den Spalt realisiert.

Die Drucküberwachung ist erforderlich, um ein definierte Scherung am Messort zu garantieren. Wenn dies mit anderen Maßnahmen sichergestellt ist (z. B. bekannte Pumpleistung, Viskosität und Spaltweite), kann eine Druckmessung entfallen. Bei einer Druckmessung bieten sich mehrere Varianten an, nämlich die T-Konfiguration, die V-Konfiguration, eine Messung mit durchflossenem Druckaufnehmer, sowie eine Bohrung in der Produktzelle. Der Aufbau der genannten Konfigurationen ist dem Fachmann bekannt. Auswahlkriterium ist die hinreichend genaue Messung der relativ kleinen Drucke, die Unempfindlichkeit gegen Druckschwankungen (z. B. wenn das Produkt mit einer pulsierenden Pumpe gefördert wird, sowie die leichte Spülbarkeit (keine Toträume) oder zumindest Reinigbarkeit.

In einer besonders bevorzugten Ausführungsform des erfindungsgemäßen Remissionssensors ist der Druckmesser in eine Messkammer mit sehr geringem Volumen eingebaut und wird mit einer sehr dünnen Teflonfolie vor dem Eindringen von als Probe eingesetzten flüssigen Pigmentpräparationen geschützt. Die Zuleitung ist in einer bevorzugten Ausführungsform aufwärts gerichtet, so dass auch bei Druckanstieg bis 2 bar noch kein Produkt in die Messkammer gelangen kann. Dadurch muss lediglich der Schlauch erneuert werden, wenn ein Probenwechsel erfolgt.

In einer weiteren besonders bevorzugten Ausführung wird ein Drucksensor bündig in die Planfläche des Einlaufvolumens, hinter den Strömungsgleichrichter eingebaut.

Die Einstellung des Eingangsdrucks ist u.a. abhängig von der Deckkraft sowie von der Viskosität der als Probe eingesetzten flüssigen Pigmentpräparation. Wird als Probe beispielsweise ein nicht stark deckender Lack eingesetzt, ist es erforderlich, eine Produktzelle mit einem größeren Messspalt zu wählen, als wenn ein stärker deckender Lack eingesetzt wird. Der Druckverlust muss dann neu eingestellt werden.

Die Probenanalysezelle kann bei dem erfindungsgemäßen Remissionssensor abgenommen werden und durch feste Proben, z. B. Bleche, Folien, Kunststoffoberflächen oder durch einen Kalibrierstandard ausgetauscht werden. Dazu enthält die Probenanalyseeinheit bevorzugt des weiteren eine Halterung für Proben, die eine feste Oberfläche aufweisen. Somit ist es mit dem erfindungsgemäßen Remissionssensor möglich, sowohl Nass- als auch Trockenmessungen durchzuführen. Dadurch ist z. B. ein Vergleich einer festen und einer flüssigen Probe eines Produktes, z. B. eines Lacks, möglich. Der erfindungsgemäße Remissionssensor ermöglicht somit einen einfachen Vergleich von Nass- und Trockenmessungen.

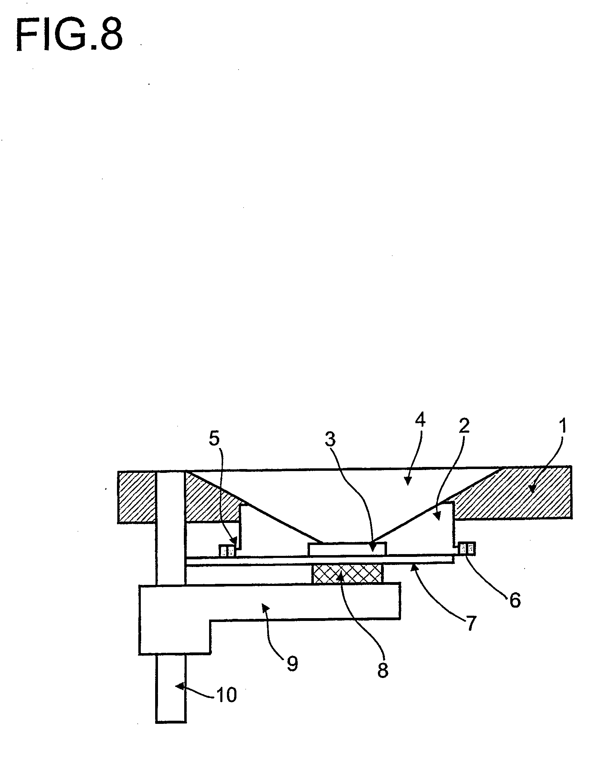

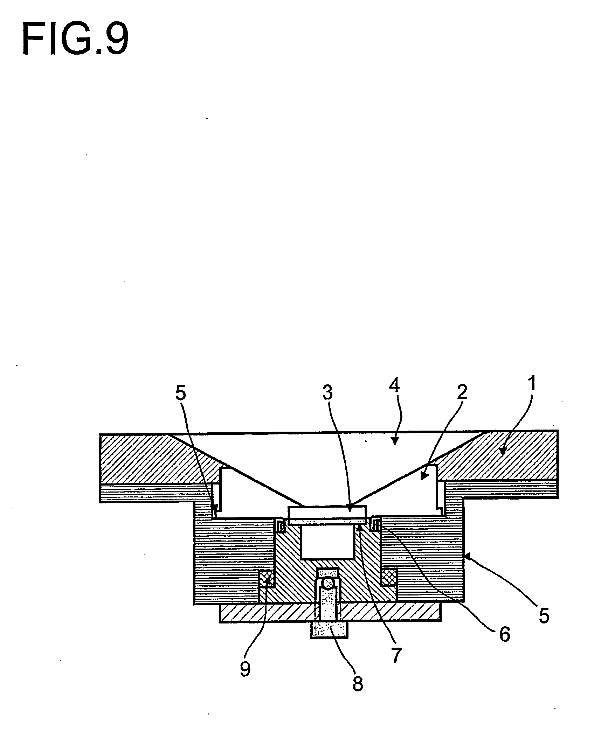

In Figur 8 ist ein Beispiel für einen Remissionssensor zur Messung fester Proben (Blechzelle) und in Figur 9 ein Beispiel für einen Remissionssensor zur Messung eines Kalibrierstandards (Referenzzelle) dargestellt.

### Figur 8: Remissionssensor zur Messung fester Proben

Darin bedeuten:
- 1: Grundplatte (Montageplatte)
- 2: Halterung Messfenster
- 3: Messfenster
- 4: Öffnung für Fasersystem
- 5: Tropfkante
- 6: Abstandshalter
- 7: feste Probe
- 8: Federelement
- 9: Anpresselement
- 10: Führungsstangen

- *Figur 9:*: *Remissionssensor zur Messung eines Kalibrierstandards*

- 1: Grundplatte (Montageplatte)
- 2: Halterung Messfenster
- 3: Messfenster
- 4: Öffnung für Fasersystem
- 5: Tropfkante
- 6: Grundkörper Referenzzelle
- 7: Abstandshalter
- 8: Referenzstandard
- 9: variables Anpresssystem

Ein weiteres bevorzugtes Merkmal des erfindungsgemäßen Remissionssensors ist somit, dass die Probenanalysezelle abnehmbar ist. Dabei ist das Abnehmen der Probenanalysezelle problemlos möglich und der nach Abnehmen der Probenanalysezelle vorhandene Teil des Remissionssensors ist zur Messung fester Proben (Trockenmessung) geeignet, ohne dass Umbauten an dem nach Abnehmen der Probenanalysezelle vorhandenen Teil des Remissionssensors erforderlich sind.

Als Halterung für Proben, die eine feste Oberfläche aufweisen (= feste Proben), das heißt zum Beispiel für Bleche, Folien, Kunststoffe oder einen Kalibrierstandard, ist jede dem Fachmann bekannte Halterung geeignet. Bevorzugt wird die feste Probe von Führungsstangen gehalten, durch ein Anpresselement an das Messfenster gedrückt und mittels eines Federelements gefedert.

### c) System-Kontrolleinheit (C)

Die System-Kontrolleinheit umfasst Detektoren zur Aufnahme von Messdaten und ein daran angeschlossenes Auswertegerät. Bevorzugt sind die Detektoren faseroptische monolithische Diodenzeilenspektrometer, die eine Auflösung von wenigstens 15 bit ermöglichen.

Alle dem Fachmann bekannten Detektoren können eingesetzt werden, bevorzugt sind es faseroptisch gekoppelte monolithische Diodenzeilenspektrometer, da diese sehr robust und signalstabil sind. Sie sollten eine möglichst hohe Auflösung haben mindestens 10 bit, bevorzugt ab 12 bit, besonders bevorzugt ab 15 bit.

In einer besonders bevorzugten Ausführungsform des Remissionssensors sind alle Einheiten des Remissionssensors, d.h. die optische Einheit, die Probenanalyseeinheit und die System-Kontrolleinheit in einem gemeinsamen Gehäuse untergebracht, in dem bevorzugt eine Ventilation und eine thermostatgeregelte Wärmeabfuhr, besonders bevorzugt über Kühlwasser, erfolgt (Kühler/Lüfter). Bevorzugt handelt es sich um ein mobiles Gehäuse, das ohne Schwierigkeiten zum Einsatzort transportiert werden kann, zum Beispiel ein Gehäuse auf Rollen. Das Gehäuse wird temperiert, da eine konstante Temperatur zu einer Verbesserung der Messgenauigkeit führt. Unabhängig davon kann es auch erforderlich sein, bei der Produkttemperatur gewisse Toleranzen einzuhalten, da starkes Verdunsten der Lösungsmittel, eine Wärmeempfindlichkeit und thermochromatische Effekte möglich sind. Gleichzeitig werden thermische Wechselbelastungen vermieden, die zu mechanischen Veränderungen führen können. Des Weiteren wird durch das Gehäuse eine Berührung der Lichtwellenleiter sowie der anderen Elemente des Remissionssensors vermieden und Lichtdichtheit gewährleistet. Durch das gemeinsame Gehäuse wird somit eine Erhöhung der Messgenauigkeit des Remissionssensors erzielt.

Eine bevorzugte Ausführungsform der Kontrolleinheit gleicht die Helligkeiten der verschiedenen optischen Signale (Referenz, Messung) durch Einsatz mindestens eines optischen Dämpfers an, um die Spektrometer gleich und somit maximal aussteuern zu können. Dies optimiert die Messgenauigkeit. Diese Dämpfer müssen die eingestellte Dämpfung konstant halten, und sind bevorzugt kontinuierlich verstellbar, und besonders bevorzugt mit einem elektromechanischen oder piezoelektrischen Präzisionsantrieb. Die Dämpfer besitzen einen Eingang für die Faseroptik und einen Ausgang zum Spektrometer. Sie sind aus Blenden, Abstandshaltern, Streuscheiben, Konversionsfiltern und Neutralfiltern konfigurierbar, dabei ist auf Stabilität und die Erhaltung einer vollständigen Aperturausleuchtung zu achten.

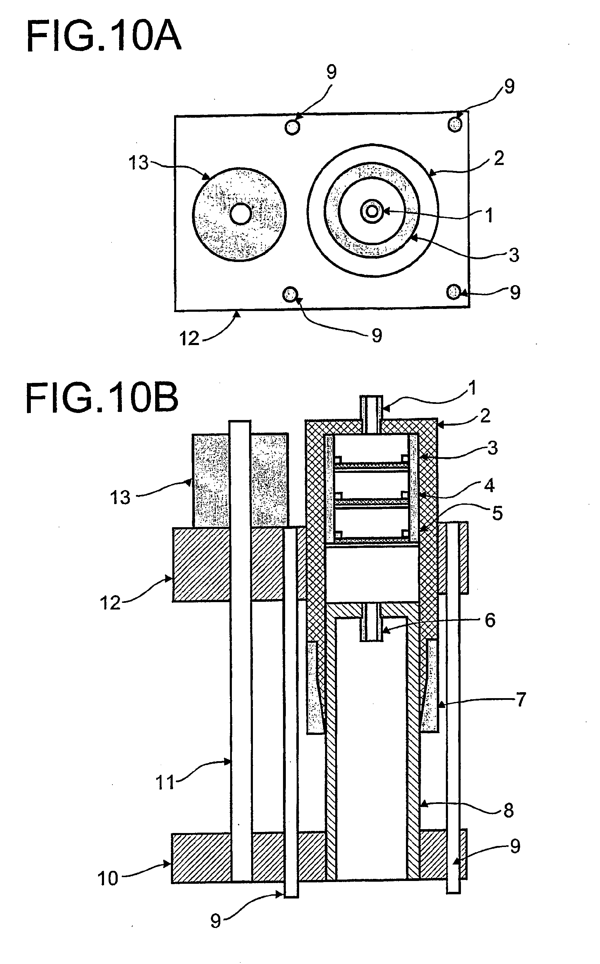

In Figur 10a und 10b ist eine besonders bevorzugte Ausführungsform eines Dämpfers dargestellt.
- *Figur 10:*: *jBevorzugte Ausführungsform eines Dämpfers*

Figur 10a (Aufsicht) und 10b (Seitenansicht)

Darin bedeuten:
- 1: SMA-Buchse Empfang
- 2: Grundkörper
- 3: Streuscheibe (optional)
- 4: Neutralfilter (optional)
- 5: Konversionsfilter (optional)
- 6: SMA-Buchse Sender
- 7: Klemmvorrichtung
- 8: Kolben
- 9: Führungsstangen (optional)
- 10: Schlitten (optional)
- 11: Antriebsstange (optional)
- 12: Motorhalterung (optional)
- 13: Motor (optional)

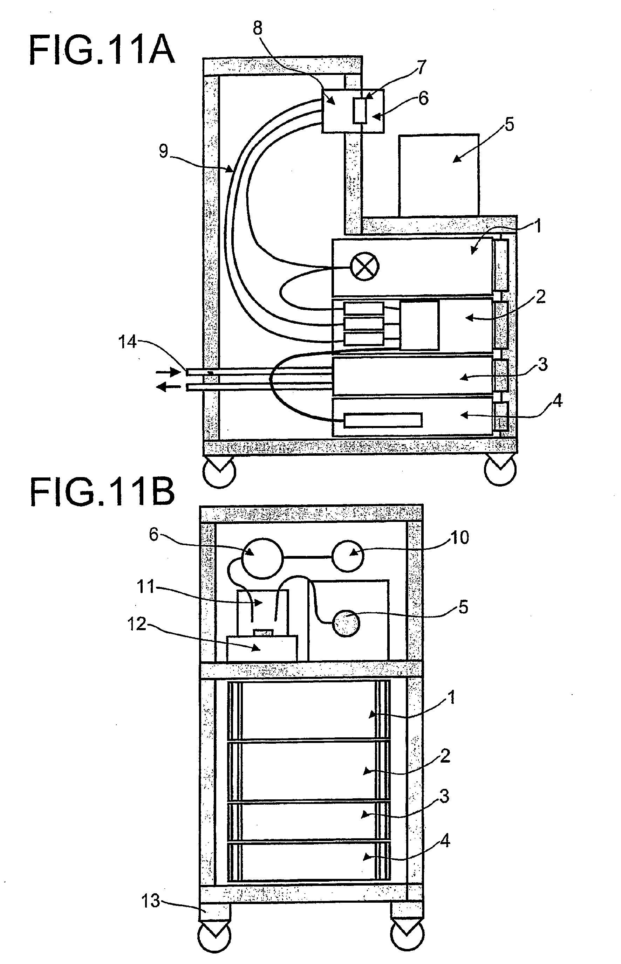

In Figur 11 ist ein bevorzugt eingesetztes System zur Remissionsmessung dargestellt..

### Figur 11: Bevorzugt eingesetztes System zur Remissionsmessung

Figur 11a (Seitenansicht) und 11b (Frontansicht)

Darin bedeuten:
- 1: Lichtquelle
- 2: Spektrometer mit
optischem Dämpfer
(Anzahl: 1 - maximal 8)
und Verstärker
- 3: Kühler
- 4: PC mit AD (analog/digital)-Wandler
- 5: Pumpe
- 6: Strömungszelle
- 7: Messfenster
- 8: Faserhalterung
- 9: Fasern, bevorzugt Glasfasern (die Zahl der Fasern kann höher sein, als in der Figur dargestellt ist)
- 10: Druckmessung
- 11: Vorlagebehälter
- 12: Rührer, z. B. Magnetrührer
- 13: mobiles Gehäuse
- 14: Kühlwasser

Spektrometer 1 - maximal 8 (siehe 2 in Figur 11) bedeutet, dass jeder zu messende Lichtweg einen eigenen spektralen Detektor (Spektrometer) besitzt.
- Weg 1 normalerweise Referenz direkt von der Lampe
- Weg 2 erster Remissionswinkel
- Weg 3 zweiter Remissionswinkel
- Weg 4 dritter Remissionswinkel
- Weg 5 ....

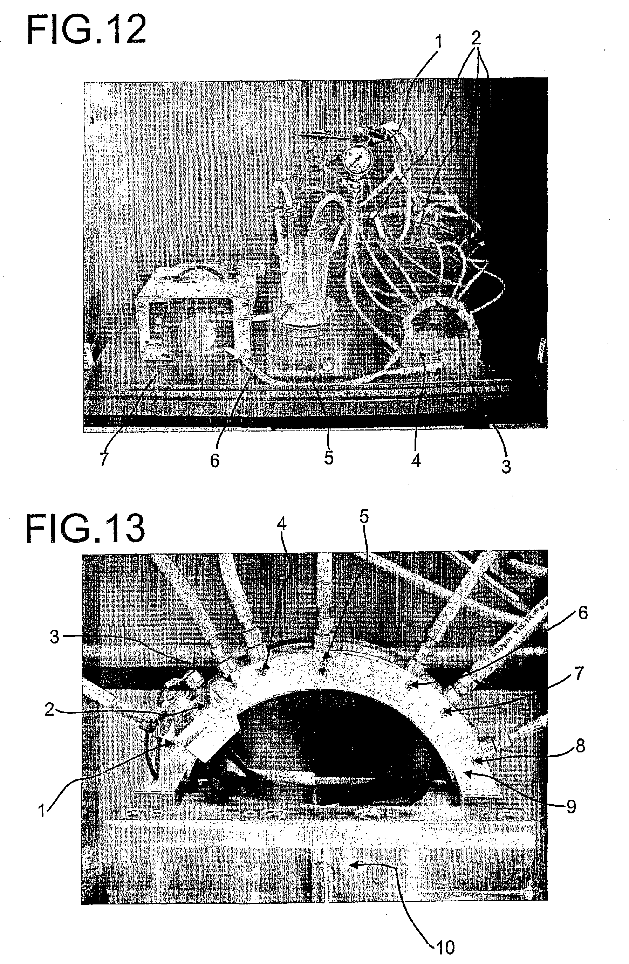

In Figur 12 ist der allgemeine Messaufbau eines hochgenauen strömungsorientierten Mehrwinkekemissionssensors dargestellt, und in Figur 13 ist die Optik bei Beleuchtung in einem Winkel und Messung unter mehreren Winkeln in Form eines sogenannten "FLOMAC-Dome" dargestellt. Dabei bedeutet Flomacs "flow oriented multi angle colour sensor".
- *Figur 12:*: *allgemeiner Messaufbau eines hochgenauen strömungsorientierten Mehrwinkel-Remissionssensors (FLOMAC)*

Darin bedeuten:
- 1: Drucküberwachung
- 2: Spektrometer
- 3: FLOMAC-Dome
- 4: FLOMAC-Zelle
- 5: Rührer
- 6: Vorlage
- 7: Pumpe

- *Figur 13:*: *Optik bei Beleuchtung in einem Winkel und Messung unter mehreren Winkeln; "FLOMAC-Dome"*

Darin bedeuten:
- 1: Empfang -15°
- 2: Spektrometer
- 3: Empfang 15°
- 4: Empfang 25°
- 5: Empfang 45°
- 6: Empfang 75°
- 7: Beleuchtung
- 8: Empfang 105°
- 9: FLOMAC-Dome
- 10: FLOMAC-Zelle

Die höchste Messgenauigkeit des Remissionssensors wird erreicht, wenn alle genannten Merkmale in dem Remissionssensor erfüllt sind. So können mit Hilfe des erfindungsgemäßen Remissionssensors zur Messung flüssiger Proben mit nicht isometrischen Partikeln, insbesondere flüssigen Pigmentpräparationen mit nicht isometrischen Partikeln, sehr hohe absolute Messgenauigkeiten von im Allgemeinen < 0,5 bis zu 0,05 dE, erzielt werden, was durch eine absolute Messgenauigkeit von 0,1% der Rohmessdaten (Remissionsintensitäten) erreicht wird. Im Vergleich dazu werden bei Messungen fester pigmentierter Oberflächen (Trockenmessungen) gemäß dem Stand der Technik absolute Messgenauigkeiten von 0,1 dE erzielt. Der erfindungsgemäße Remissionssensor ist somit geeignet, aufwändige Trockenmessungen im Bereich der Messung von Proben mit nicht isometrischen Partikeln zu ersetzen. Dies wird durch die Sensorcharakteristik des erfindungsgemäßen Remissionssensors sowie durch die erfindungsgemäße Strömungszelle erreicht.

Vor Beginn der Messungen muss der Remissionssensor kalibriert werden. Dies kann grundsätzlich auf jede beliebige, dem Fachmann bekannte Art und Weise erfolgen. Bevorzugt wird zur Kalibrierung des Remissionssensors eine weiße Glasscheibe verwendet, da diese wesentlich weniger verschmutzungsanfällig ist als eine üblicherweise eingesetzte matte Oberfläche. Das Glas hat gegenüber der matten Oberfläche den Vorteil, dass es nicht altert und sich immer wieder definiert reinigen lässt. Die Spiegelung des Glases ist unkritisch, da der Remissionssensor den Glanz ausblendet. Zur Kalibrierung wird die Probenanalysezelle des Remissionssensors abgenommen.

In einer bevorzugten Ausführungsform wird die weiße Glasscheibe (Kalibrierscheibe) in einen Präzisionshalter an den üblicherweise in einer bevorzugten Ausführungsform die Probenanalyseeinheit tragenden Führungsstangen gegen das Messfenster geführt und mit Passstiften positioniert. Für einen definierten und reproduzierbaren Abstand der weißen Glasscheibe zum Messfenster sorgt ein Abstandshalter. Vorteilhaft wird dieser auf Werte von 50 bis 500 µm, besonders bevorzugt etwa 100 µm eingestellt. Die Glasscheibe und der Abstandshalter sind elastisch gelagert, bevorzugt über ein variables Anpresssystem zum Beispiel mittels Federkraft oder einem Elastomer, so dass sie immer plan mit definierter Anpresskraft auf dem Messfenster aufliegen. Die Reproduzierbarkeit dieser Kalibrierung liegt bei etwa 0,1%.

Ein weiterer Vorteil des erfindungsgemäßen Remissionssensors ist, dass mit dieser Vorrichtung auch Messungen, insbesondere Vergleichsmessungen, mit Oberflächen entsprechender fester Proben, z. B. Blechen und Folien, anstelle der flüssigen Proben mit nicht isometrischen Partikeln durchgeführt werden können, wenn die Probenanalysezelle durch diese festen Proben, z. B. Bleche und Folien, ausgetauscht wird. Dazu können Führungsstangen, insbesondere die oberen Führungsstangen entfernt werden. Auf den Messkopf (d.h. Messfenster mit Halterung) wird im Allgemeinen ein Abstandshalter gestülpt. Auf die unteren Stangen wird ein Blech gestellt, das durch ein von diesen Stangen geführtes Anpresselement gegen das Messfenster gedrückt wird. Die Anpressung erfolgt mit einer elastisch aufgehängten Planplatte in der Größe des Messfensters. Des Weiteren können zum Vergleich auch feste und flüssige Proben ohne nicht isometrische Partikel gemessen werden.

Die Möglichkeit, mit der gleichen Optik auch feste Proben, z. B. Bleche, in definiertem Abstand und in definierter Ausrichtung zu messen, ist eine Besonderheit der planen Ausführung des Messfensters und der abnehmbaren Produktzelle. Diese Möglichkeit erlaubt eine einfache Übertragung von Nassmessungen auf Trockenmessungen.

Ein weiterer Gegenstand der vorliegenden Anmeldung ist ein Verfahren zur Messung der Remission einer flüssigen Probe enthaltend nicht isometrische Partikel umfassend:
i) Ausbildung eines Probenstroms einer Probe enthaltend nicht isometrische Partikel mit einer definierten Dicke und definierter Ausrichtung der Partikel in der Probe in zwei Achsen unter Verwendung der erfindungsgemäßen dreidimensionalen Strömungszelle,
ii) Bestrahlung des Probenstroms unter einem oder mehreren Winkeln mit von einer Lichtquelle ausgesandter elektromagnetischer Strahlung, wobei die elektromagnetische Strahlung mit der Probe in Wechselwirkung tritt und ein Teil der Strahlung nach Wechselwirkung mit der Probe diffus reflektiert wird,
iii) Empfangen und Erfassen der diffus reflektierten Strahlung als Remissionssignal unter mehreren Winkeln,
iv) Empfangen und Erfassen eines Referenzsignals, wobei das Referenzsignal von derselben Lichtquelle, die zur Bestrahlung des Probenstroms dient, ausgesandte elektromagnetische Strahlung ist, die nicht mit der Probe in Wechselwirkung tritt,
wobei das Remissionssignal und das Referenzsignal simultan erfasst werden.

Damit wird erreicht, dass alle Signale, d.h. die Remissionssignale und das Referenzsignal von den gleichen zufälligen Schwankungen betroffen werden. Dies wird durch Verwendung von faseroptischen monolithischen Diodenzeilen-Spektrometern erreicht, die bevorzugt eine Auflösung von wenigstens 15 bit ermöglichen und die mit Integrationszeiten zwischen 4 ms und 6000 ms an die vorhandene Helligkeit angepasst werden. Die mit solchen Diodenzeilen-Spektrometern gemessenen Werte beziehen sich auf eine Diodennummer und müssen auf feste Wellenlängen interpoliert werden. Diese Interpolation ist besonders genau, wenn ein Spline verwendet wird, was bevorzugt ist. Dazu müssen jedoch vorher die Empfindlichkeitsunterschiede der einzelnen Dioden ausgeglichen werden, da es sonst zu Überschwingungen kommt. Dieser Ausgleich erfolgt durch das Teilen der Signale durch ein für den Sensorbaustein charakteristisches Muster (pattern) vor der Interpolation.

Zur Ausbildung des Probenstroms mit einer definierten Dicke und definierter Ausrichtung der Partikel in der Probe in zwei Achsen wird bevorzugt eine dreidimensionale Strömungszelle gemäß der vorliegenden Anmeldung eingesetzt. Bevorzugte Ausführungsformen der Strömungszelle und bevorzugte Ausrichtungen der Partikel sind vorstehend genannt.

In einer bevorzugten Ausführungsform wird das erfindungsgemäße Verfahren mit dem erfindungsgemäßen Remissionssensor durchgeführt. Bevorzugte Ausführungsformen des erfindungsgemäßen Remissionssensors sind bereits vorstehend genannt.

Ein weiterer Gegenstand der vorliegenden Anmeldung ist daher die Verwendung des erfindungsgemäßen Remissionssensors zur Messung der Remission einer flüssigen Probe enthaltend nicht isometrische Partikel.

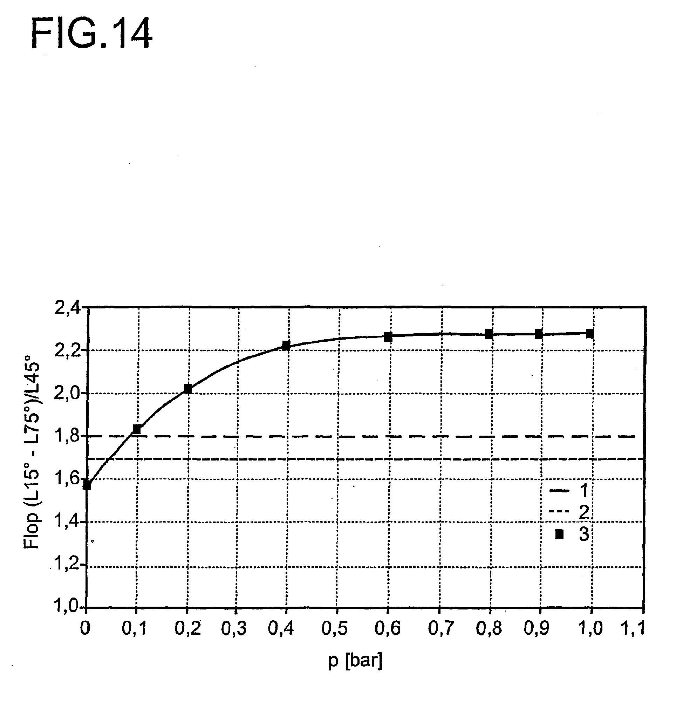

In Figur 14 sind Messdaten dargestellt, die die Abhängigkeit des Flops ((Helligkeit L bei 15° minus Helligkeit L bei 75°)/ Helligleit L bei 45°) von dem in der Strömungszelle eingestellten Druck und damit von der Strömungsgeschwindigkeit betreffen. Das heisst, Figur 14 betrifft die Flopzahl eines Metallic-Pigments als Funktion des Druckabfalls in der erfindungsgemäßen dreidimensionalen Strömungszelle. Des Weiteren sind in Figur 14 zum Vergleich Einzelmessungen an Blechen, die mit einem Effekt-Lack, enthaltend das Metallic-Pigment (demselben Lack, der als flüssige Probe vermessen wird) lackiert sind, mittels des erfindungsgemäßen Remissionssensors zur Messung fester Proben, wie vorstehend beschrieben, und mittels eines Remissionssensors gemäß dem Stand der Technik (MA 68 II; Multi-Angle Spektrophotometer von X-Rite), dargestellt.
- *Figur 14:*: *Flopzahl eines Metallic-Pigments als Funktion des Druckabfalls an der erfindungsgemäßen dreidimensionalen Strömungszelle plus verschiedene Einzelmessungen an Blechen, die mit einem Effekt-Lack lackiert sind*

### x-Achse:

Druck p[bar]

### γ-Achse:

Flop (L15°-L75°)/L45°

### Legende:

1 X-Rite Blech (Blech, gemessen mit einem Spektrometer des Standes der Technik (MA 68 II; Multi-Angle Spektrophotometer von X-Rite))
2 Dome Blech (Blech, gemessen mit einem Spektrometer zur Messung fester Proben gemäß der vorliegenden Anmeldung)
3 Dome flüssig (flüssige Probe, gemessen mit dem erfindungsgemäßen Spektrometer zur Messung flüssiger Proben)

Wie Figur 14 zu entnehmen ist, erfolgt ab einem bestimmten Druck und somit einer bestimmten Strömungsgeschwindigkeit eine Ausrichtung der nicht isometrischen Metallic Pigmente in der flüssigen Probe entsprechend der Ausrichtung der nicht isometrischen Metallic-Pigmente auf den Blechen.

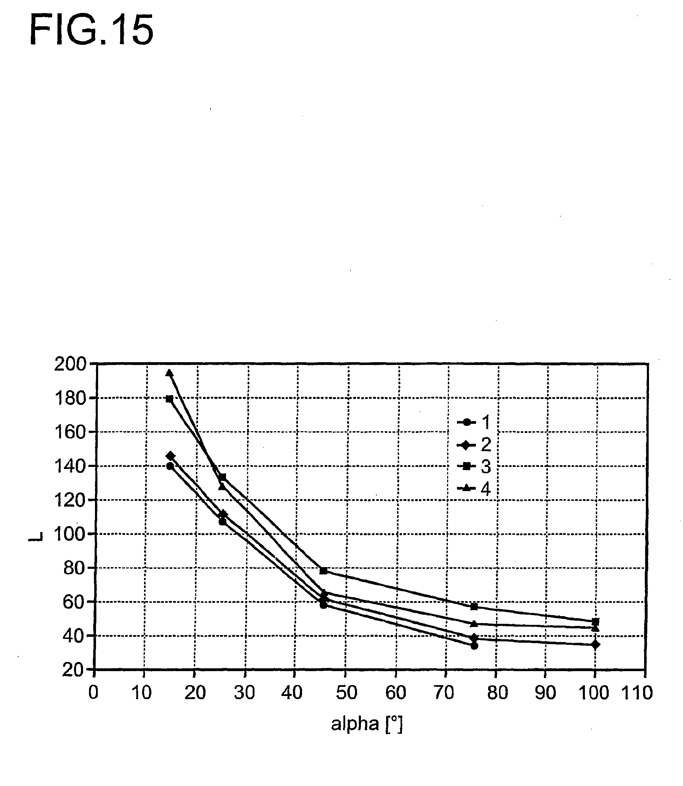

In Figur 15 sind Messdaten dargestellt, die die Abhängigkeit der Helligkeit vom Remissionswinkel relativ zum Glanz (Winkel alpha) betreffen. Dabei wird ein Vergleich von Messdaten an lackierten Blechen, gemessen mit einem Remissionssensor des Standes der Technik (MA 68 II; Multi-Angle Spektrophotometer von X-Rite), lackierten Blechen, gemessen mit dem erfindungsgemäßen Remissionssensor zur Messung fester Proben und von flüssigen Proben (des gleichen Lacks, mit dem die Bleche lackiert wurden), gemessen mit verschiedenen Ausführungsformen des erfindungsgemäßen Remissionssensors zur Messung flüssiger Proben, wobei die dreidimensionale Strömungszelle in den Ausführungsformen unterschiedlich aufgebaut ist, dargestellt.
- *Figur 15:*: *Metallic Pigment gemessen mit den Flomacs-Dome* (= *erfindungsgemäßer Remissionssensor) und dem X-Rite* (= *Remissionssensor des Standes der Technik; MA 68 II; Multi-Angle Spektrophotometer von X-Rite) (Beleuchtung unter 45* ° *zur Senkrechten) gemessen an Blechen und in einer flüssigen Probe*

### x-Achse:

Remissionswinkel relativ zum Glanz alpha [°]

### y-Achse:

Helligkeit L

### Legende:

- 1: X-Rite Blech
- 2: Dome Blech
- 3: Symmetrische Zelle Dome flüssig
- 4: Unsymmetrische Zelle Dome flüssig

Alle Daten sind vergleichbar, wie Figur 15 zu entnehmen ist. Das bedeutet, die Messungen der flüssigen Proben liefern zuverlässige und vergleichbare Daten betreffend das Verhalten von nicht isometrischen Partikeln in festen Proben.

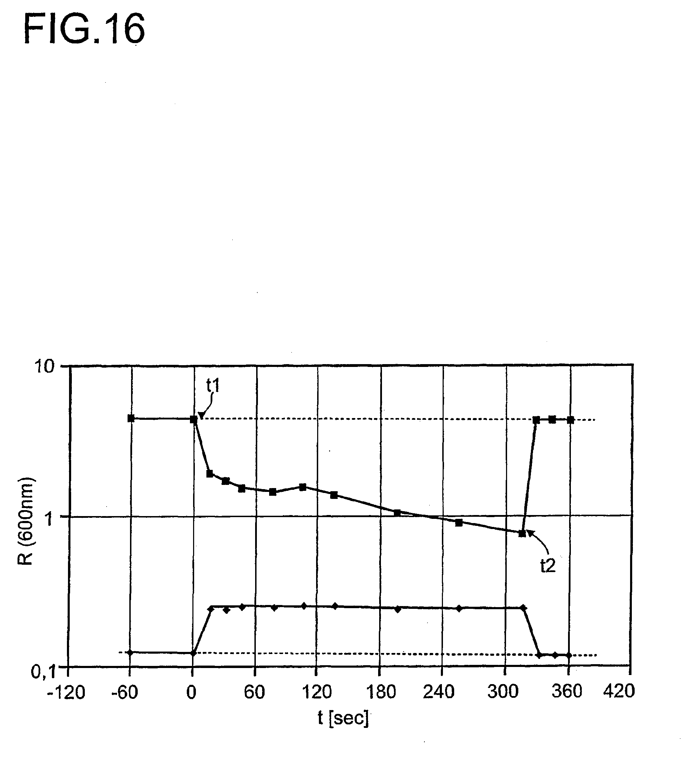

In Figur 16 sind Messdaten von flüssigen Proben enthaltend Metallic-Pigmente dargestellt. Dabei wird die Remission in Abhängigkeit davon gemessen, ob eine Strömung der flüssigen Probe erfolgt (Pumpe an) oder nicht (Pumpe aus).
- *Figur 16:*: *Remission von Metallic-Pigment gemessen mit dem erfindungsgemäßen Remissionssensor mit dreidmesionaler Strömungszelle in Abhängigkeit von der Strömung der flüssigen Probe*
Zeit t [sec]

### y-Achse:

Remission R (bei 600 nm)

### Legende:

| | |
|---|---|
| 15° | Beobachtungswinkel |
| 100° | Beobachtungswinkel |

- t1: Pumpe aus
- t2: Pumpe an

In Figur 16 ist die Änderung der Remission der Probe deutlich erkennbar, wenn die Pumpe ausgeschaltet ist, also keine Strömung der Probe erfolgt und somit keine Ausrichtung der nicht isometrischen Aluminium-Effekt-Pigmente.

Der erfindungsgemäße Remissionssensor kann somit zum Beispiel in den folgenden Anwendungen eingesetzt werden:
1. Beurteilung, von Pigmenteigenschaften mit Testmischungen
   Ähnlich wie ein kommerzielles isometrisches Pigment in Weiß- und Schwarzabmischung vollständig charakterisiert werden kann, kann eine Mischung von Metallic- bzw. Effektpigment mit Weiß und Schwarz zur Charakterisierung der Flopeigenschaften eingesetzt werden.
2. Steuerung einer Dosieranlage
   Der Vorteil - Ersatz der zeitaufwendigen Herstellung von lackierten Probetafeln durch einfache Nassmessung - gilt auch bei der Fertigung von Lacken durch Mischen verschiedener Flüssigkeiten, zum Beispiel mit einer Dosieranlage. In diesem Fall wird zum Erreichen der gewünschten Farbe nicht der Dispergierprozess, sondern der Dosierprozess geregelt.
3. Automatisch geregelten Farbeinstellung bei der Lackproduktion
   Die Einstellung eines Lackes auf eine genaue Farbe, das "Tönen" (= Zugabe von "Hilfspigmenten" zur Farbabstimmung), erfolgt heute durch manuelle Probenahme, gegebenenfalls Applikation, Messung, Zugabe von Pigmentdispersionen, in wiederholter Folge. Eine Automatisierung des Prozesses mit Hilfe einer inline-Remissionsmessung ist auf Grund der ungenügenden Genauigkeit der verfügbaren Messgeräte nicht möglich. Ein inline einsetzbares Remissionsmessgerät mit hoher Genauigkeit würde die Möglichkeit zu einem automatisch gesteuerten Tönprozess eröffnen.
4. Farbanpassung in einer Lackieranlage
   Die Farbe des Lacks lässt sich auch unmittelbar vor der Lackierung anpassen, indem in die Lackieranlage eine Dosieranlage für Farbpasten integriert wird (siehe Color-on-Demand, Fa. PPG), und die Steuerung der Zudosierung über eine Farbmessung des flüssigen Lacks erfolgt, die in diesem Fall vorzugsweise inline erfolgen sollte.
5. Kontrolle nachträglicher Farbänderungen
   Durch Alterung oder Scherbeanspruchung können Pigmentpasten oder Lacke ihre Farbe nachträglich ändern. Eine Überwachung der Farbkonstanz mit einem - vorzugsweise inline eingesetzten - hochgenauen Messverfahren wäre hilfreich.
6. Kontrolle der Produktqualität in Ringleitungen von typischen Ringleitungsanlagen (z.B. Automobilhersteller).

Ein weiterer Gegenstand der vorliegenden Anmeldung ist somit die Verwendung des erfindungsgemäßen Remissionssensors zur Remissionsmessung flüssiger Pigmentpräparationen enthaltend nicht isometrische Partikel in einer beliebigen Verfahrensstufe bei der Herstellung, Weiterverarbeitung und Anwendung von flüssigen Pigmentpräparationen, bevorzugt zur Qualitätskontrolle bei der Dispergierung von pigmentierten Lacken und Pigmentpasten, zur Qualitätsbeurteilung bei der Lackherstellung, zur Steuerung einer Dosieranlage bei der Fertigung von Lacken durch Mischen verschiedener Flüssigkeiten, zur automatisch geregelten Farbeinstellung durch Tönen bei der Lackproduktion, zur Farbanpassung der Farbe des Lacks in einer Lackieranlage, die eine Dosieranlage für Farbpasten aufweist und/oder zur Kontrolle nachträglicher Farbänderungen durch Alterung oder Scherbeanspruchung von pigmentierten Lacken oder Pigmentpasten.

Ein weiterer Gegenstand der vorliegenden Anmeldung ist die Verwendung des erfindungsgemäßen Remissionssensors zur Durchführung des erfindungsgemäßen Verfahrens.

Es ist bekannt, dass bei Effekt-Lacken, also Lacken, die als nicht isometrische Partikel Metallic-Pigmente und/oder Effektpigmente enthalten, die Art der Applikation einen großen Einfluss auf das Aussehen des Lacks hat, was zum Teil gezielt genutzt wird (z.B. "nasser oder trockener" applizieren, um einen höheren oder geringeren Flop zu erzielen; elektrostatische oder pneumatische Applikation). Es ist ferner bekannt, dass zwei Effekt-Lacke, die bei bestimmten Applikationsparametem gleich sind, bei anderen unterschiedlich sein können. Dies liegt nach derzeitiger Einschätzung (ohne an eine Theorie gebunden zu sein) daran, dass einige Effektpigmente auf Einflüsse, die den Orientierungsgrad der Partikel vermindern, schneller bzw. stärker reagieren als andere. Der Erfahrungswert ist, dass die kleineren Partikel den Orientierungsgrad schneller vermindern. Dies passt gut zu der theoretischen Vorstellung, dass die Brownsche Molekularbewegung, die kleinen Partikel schneller dreht, und dass die kleineren Partikel in dünnen Schichten leichter größere Winkel einnehmen können.

Mit Hilfe des erfindungsgemäßen Remissionssensors ist eine zeitliche Verfolgung des Orientierungsgrades und eine Messung von Proben, die dieselben Partikel in verschiedenen Orientierungsgraden enthalten, möglich. Eine wesentliche Eigenschaft des erfindungsgemäßen Remissionssensors ist somit die "lacknahe" Ausrichtung der Effektpigmente. Das bedeutet, mit Hilfe des erfindungsgemäßen Remissionssensors ist eine Korrelation zwischen der Ausrichtung von nicht isometrischen Partikeln und ihren optischen Eigenschaften möglich. Dabei ist zu berücksichtigen, dass die nicht isometrischen Partikel, insbesondere Metallic-Pigmente und/oder Effektpigmente nicht immer in vollständig ausgerichteter Orientierung vorliegen.

Im Experiment bestätigt sich, dass ein Ausrichtungseffekt, wie er berechnet werden kann, stattfindet, und in gewissen Grenzen gezielt einstellbar ist (siehe Figur 15). Auf dieser Basis ist es möglich, den erfindungsgemäßen Remissionssensor noch besser an den Praxisbedarf anzupassen, z.B. dadurch, dass keine optimale - im Sinne von vollständiger - Ausrichtung von Partikeln eingestellt wird, sondern eine teilweise Ausrichtung wie sie z.B. in einem bestimmten Lack erfolgt.

Die Messung bei zwei Ausrichtungen, bei denen eine die kleineren Effektpigmente in einen deutlich verminderten Ausrichtungsgrad erfasst, ist realisierbar, und erlaubt eine gewisse Vorhersage des Applikationseinflusses.

Die im Strömungsfeld erzielte Ausrichtung hängt zum Einen von den Querschnittsverhältnissen in der dreidimensionalen Strömungszelle ab, und baut sich andererseits im Parallelteil der Zelle durch die Brownsche Molekularbewegung und den sich aufbauenden Strömungsgradienten und die daraus resultierenden Drehkräfte graduell wieder ab. Realisiert wird dieses Prinzip der Erzielung und Messung verschiedener Ausrichtungen der Partikel einer Probe durch Messung mit zwei verschiedenen Zellen, den Umtausch von Ein- und Auslass der Strömungszelle, oder die Messung bei verschiedenen Strömungsgeschwindigkeiten, oder besonders vorteilhaft an zwei verschiedenen Stellen mit unterschiedlichem Ausrichtungsgrad am Beginn der Messzone und am Ende.

Mit Hilfe des erfindungsgemäßen Remissionssensors sowie des erfindungsgemäßen Verfahrens ist eine genaue und schnelle Bestimmung der Remission flüssigen Proben enthaltend nicht isometrische Partikel, insbesondere von flüssigen Pigmentpräparationen, insbesondere von Lacken, Pigmentpasten und Weißabmischungen möglich, die gegenüber der ebenfalls hochgenauen Messung (dE ∼ 0,1) an gespritzten Flächen eine erhebliche, wirtschaftlich relevante Zeitersparnis bietet. Dies ist möglich durch eine zweidimensionale Ausrichtung der nicht isometrischen Partikel mit Hilfe der erfindungsgemäßen dreidimensionalen Strömungszelle. Dabei ist erstmals eine reproduzierbare Messung flüssiger Proben enthaltend nicht isometrische Partikel möglich. Mit Hilfe der erfindungsgemäßen Mehrwinkelmesseinrichtung können des weiteren Messungen bei verschiedenen Beleuchtungswinkeln mit einem Remissionssensor vorgenommen werden.

Die Möglichkeit, mit der gleichen Optik auch feste Proben, z. B. Bleche, in definiertem Abstand und in definierter Ausrichtung zu messen, ist eine Besonderheit der planen Ausführung des Messfensters und der abnehmbaren Produktzelle. Diese Möglichkeit erlaubt eine einfache Übertragung von Nassmessungen auf Trockenmessungen.

## Patentansprüche

1. Dreidimensionale Strömungszelle zur Ausrichtung von nicht isometrischen Partikeln in einer flüssigen Probe in zwei Achsen, umfassend eine Zulaufzone für die Probe enthaltend auszurichtende nicht isometrische Partikel, einen Auslass für die Probe enthaltend in zwei Achsen ausgerichtete nicht isometrische Partikel und eine Dehnungszone, wobei ein Fluidelement der Probe mit den Maßen a, b, c in der Dehnungszone zu einem Fluidelement mit den Maßen a x n, b/(n x m), c x m umgeformt wird, wobei a die Breite, b die Höhe und c die Länge des Fluidelements bedeuten und n und m von der Geometrie der Strömungszelle abhängige Konstanten sind, die positive Zahlen > 1 bedeuten.

2. Dreidimensionale Strömungszelle nach Anspruch 1, **dadurch gekennzeichnet, dass** n=m.

3. Verfahren zur Ausrichtung von nicht isometrischen Partikeln in einer flüssigen Probe, wobei die flüssige Probe eine dreidimensionale Strömungszelle gemäß Anspruch 1 oder 2 durchfließt, wobei ein Fluidelement der flüssigen Probe mit den Maßen a, b, c zu einem Fluidelement mit den Maßen a x n, b/(n x m), c x m umgeformt wird, wobei a die Breite, b die Höhe und c die Länge des Fluidelements bedeuten und m und n von der Geometrie der Strömungszelle abhängige Konstanten sind, die positive Zahlen > 1 bedeuten.

4. Verfahren nach Anspruch 3, **dadurch gekennzeichnet, dass** n = m.

5. Verwendung einer dreidimensionalen Strömungszelle gemäß Anspruch 1 oder 2 zur zweidimensionalen Ausrichtung von nicht isometrischen Partikel in einer flüssigen Probe in zwei Achsen, bevorzugt zur Ausrichtung von nicht isometrischen Partikeln in flüssigen Pigmentpräparationen.

6. Photometrische Messeinrichtung zur Messung des Dämpfungsgrades bei der Lichtausbreitung einer flüssigen Probe enthaltend nicht isometrische Partikel, umfassend eine dreidimensionale Strömungszelle zur Ausrichtung der Partikel in der flüssigen Probe in zwei Achsen gemäß Anspruch 1 oder 2.

7. Photometrische Messeinrichtung nach Anspruch 6, **dadurch gekennzeichnet, dass** es sich bei der photometrischen Messeinrichtung um einen Remissionssensor handelt.

8. Photometrische Messeinrichtung nach Anspruch 7 aufgebaut aus
a) einer optischen Einheit, die
aa) eine Lichtquelle in Form einer Lampe, und
ab) eine Faseroptik umfassen Lichtwellenleiter, wobei mindestens ein Lichtwellenleiter ein Referenzleiter ist,
umfasst,
b) einer Probenanalyseeinheit, die
ba) ein Messfenster, und
bc) eine Probenanalysezelle mit der dreidimensionalen Strömewgszelle, umfasst,
wobei auf einer Seite des Messfensters die optische Einheit angeordnet ist und auf der anderen Seite des Messfensters die Probenanalysezelle mit der dreidimensionalen Strömungszelle angeordnet ist, in dem diese so an das Messfenster angepresst ist, dass ein Spalt zwischen Messfenster und Probenanalysenzelle gebildet wird, den eine zu messende flüssige Probe enthaltend nicht isometrische Partikel durchqueren muss, wobei die zu messende flüssige Probe durch die dreidimensionale Strömungszelle, die vor dem Spalt angeordnet ist, in einer speziellen Strömungsführung an den Spalt herangeführt wird,
und
c) einer System-Kontrolleinheit umfassend Detektoren zur Ausnahme von Messdaten und ein daran angeschlossenes Auswertegerät,
wobei mindestens eine Lichtwellenleiterverbindung von der Lichtquelle zu dem Messfenster und von dem Messfenster weiter zum Detektor geführt wird, zur Erzeugung eines Messignals, und mindestens eine Referenzleiterverbindung direkt von der Lichtquelle zum Detektor oder vom Messfenster zum Detektor geführt wird, zur Erzeugung eines Referenzsignals.

9. Photometrische Messeinrichtung nach Anspruch 8, **dadurch gekennzeichnet, dass** die Lampe ausgewählt ist aus der Gruppe bestehend aus LED's. Gasentladungslampen und Lampen mit Glühwendel.

10. Photometrische Messeinrichtung nach einem der Ansprüche 8 oder 9, **dadurch gekennzeichnet, dass** die Lampe einen integrierten Shutter aufweist.

11. Photometrische Messeinrichtung nach einem der Ansprüche 8 bis 10, **dadurch gekennzeichnet, dass** die Lichtwellenleiter Fasern mit 100, 200, 400, 600 oder 800 µm Faserdurchmesser sind.

12. Photometrische Messeinrichtung nach einem der Ansprüche 8 bis 11, **dadurch gekennzeichnet, dass** die als Referenzleiter eingesetzte Faser einen angepassten, bevorzugt kleineren Durchmesser aufweist als die übrigen Lichtwellenleiter.

13. Photometrische Messeinrichtung nach einem der Ansprüche 8 bis 12, **dadurch gekennzeichnet, dass** er zusätzlich mindestens eines der folgenden Merkmale aufweist:
ac) hinter der Lampe ist ein Kompensationsfilter angeordnet, der das Spektrum der Lampe so linealisiert, dass der Unterschied zwischen höchster und niedrigster Intensität des von der Lampe ausgestrahlten Lichts möglichst klein, z.B. maximal Faktor 4 ist,
ad) hinter der Lampe - bei Einsatz eines Kompensationsfilters zwischen Lampe und Kompensationsfilter - ist ein IR-Sperrfilter, ein Kondensator und eine Streuscheibe angeordnet,
ae) die Lichtwellenleiter werden in Schutzschläuche geführt und auf voller Länge mittels eines Stützgestells gestützt,
af) der Referenzleiter wird über ein präzises Abstandselement mit eingebauter Streuscheibe geführt und definiert abgeschwächt.

14. Photometrische Messeinrichtung nach einem der Ansprüche 8 bis 13, **dadurch gekennzeichnet, dass** das Messfenster eine Planplatte, bevorzugt eine Planplatte aus Glas, Halbedelsteinen oder Diamant, besonders bevorzugt mit 1 bis 20 mm Dicke und 40 bis 100 mm Durchmesser.

15. Photometrische Messeinrichtung nach einem der Ansprüche 8 bis 14, **dadurch gekennzeichnet, dass** der Spalt 2 bis 10 mm lang ist und zwischen 0,05 und 5 mm hoch ist.

16. Photometrische Messeinrichtung nach einem der Ansprüche 8 bis 15, **dadurch gekennzeichnet, dass** bei der Durchquerung der Partikel enthaltenden flüssigen Probe eine erhebliche Scherung der Probe erfolgt, die bevorzugt durch einen Druckabfall von der Eintrittsstelle der Probe in den Spalt bis zu ihrer Austrittstelle von 0.1 bis 3 bar auf 2 bis 10 mm Länge erreicht wird.

17. Photometrische Messeinrichtung nach einem der Ansprüche 8 bis 16, **dadurch gekennzeichnet, dass** die Probenanalysezelle abnehmbar ist.

18. Photometrische Messeinrichtung nach einem der Ansprüche 8 bis 17, **dadurch gekennzeichnet, dass** die System-Kontrolleinheit Detektoren in Form von faseroptischen monolithischen Diodenzeilensensoren aufweist, die eine Auflösung von wenigstens 15 bit ermöglichen.

19. Photometrische Messeinrichtung nach einem der Ansprüche 7 bis 18, **dadurch gekennzeichnet, dass** alle Einheiten der Messeinrichtung in einem gemeinsamen Gehäuse untergebracht sind, in dem eine Ventilation und eine thermostageregelte Wärmeabfuhr erfolgt.

20. Verfahren zur Messung der Remission einer flüssigen Probe enthaltend nicht isometrische Partikel, umfassend:
i) Ausbildung eines Probenstroms einer Probe enthaltend nicht isometrische Partikel mit definierter Dicke und definierter Ausrichtung der Partikel in der Probe in zwei Achsen unter Verwendung einer dreidimensionalen Strömungszelle gemäß Anspruch 1 oder 2,
ii) Bestrahlung des Probestroms unter einem oder mehreren Winkeln mit von einer Lichtquelle ausgesandter elektromagnetischer Strahlung, wobei die elektromagnetische Strahlung mit der Probe in Wechselwirkung tritt und ein Teil der Strahlung nach Wechselwirkung der Probe diffus reflektiert wird,
iii) Empfangen und Erfassen der diffus reflektierten Strahlung als Remissionssignal unter mehreren Winkeln,
iv) Empfangen und Erfassen eines Referenzsignals, wobei das Referenzsignal von derselben Lichtquelle, die zur Bestrahlung des Probenstroms dient, ausgesandte elektromagnetische Strahlung ist, die nicht mit der Probe in Wechselwirkung tritt,
wobei das Remissionssignal und das Referenzsignal simultan erfasst werden.

21. Verwendung einer photometrischen Messeinrichtung nach einem der Ansprüche 7 bis 19 zur Messung der Remission einer flüssigen Probe enthaltend nicht isometrische Partikel, bevorzugt einer flüssigen Probe in Form einer flüssigen Pigmentpräparation enthaltend nicht isometrische Partikel.

22. Verwendung einer photometrischen Messeinrichtung nach einem der Ansprüche 7 bis 19 zur Remissionsmessung flüssiger Pigmentpräparationen enthaltend nicht isometrische Partikel in einer beliebigen Verfahrensstufe bei der Herstellung, Weiterverarbeitung und Anwendung von flüssigen Pigmentpräparationen, zur Qualitätsbeurteilmig bei der Lackherstellung, zur Steuerung einer Dosieranlage bei der Fertigung von Lacken durch Mischen verschiedener Flüssigkeiten, zur automatisch geregelten Farbeinstellung durch Tönen bei der Lackproduktion, zur Farbanpassung der Farbe des Lacks in einer Lackieranlage, die eine Dosieranlage für Farbpasten aufweist, zur Kontrolle nachträglicher Farbänderungen durch Alterung oder Scherbeanspruchung von pigmentierten Lacken oder Pigmentpasten und/oder zur Kontrolle der Produktqualität in Ringleitungen von Ringleitungsanlagen.

23. Photometrische Messeinrichtung nach einem der Ansprüche 7 bis 19, **dadurch gekennzeichnet, dass** eine Bestrahlung der Probe unter einem oder mehreren Winkeln mit von einer Lichtquelle ausgesandter elektromagnetischer Strahlung erfolgt und ein Empfangen und Erfassen eines Remissionssignals unter mehreren Winkeln erfolgt.

## Claims

1. Three-dimensional flow cell for aligning non-isometric particles in a liquid sample in two axes, comprising a feed zone for the sample containing non-isometric particles to be aligned, an outlet for the sample,containing non-isometric particles aligned in two axes and an expansion zone, a fluid element of the sample with the dimensions a, b, c being transformed in the expansion zone into a fluid element with the dimensions a x n, b/(n x m), c x m, a being the width, b the height and c the length of the fluid element and n and m being constants which depend on the geometry of the flow cell and which signify positive numbers > 1.

2. Three-dimensional flow cell according to Claim 1, **characterized in that** n = m.

3. Method of aligning non-isometric particles in a liquid sample, the liquid sample flowing through a three-dimensional flow cell according to Claim 1 or 2, a fluid element of the liquid sample with the dimensions a, b, c being transformed into a fluid element with the dimensions a x n, b/(n x m), c x m, a being the width, b the height and c the length of the fluid element and m and n being constants which depend on the geometry of the flow cell and which signify positive numbers > 1.

4. Method according to Claim 3, **characterized in that** n = m.

5. Use of a three-dimensional flow cell according to Claim 1 or 2 for the two-dimensional alignment of non-isometric particles in a liquid sample in two axes, preferably for the alignment of non-isometric particles in liquid pigment preparations.

6. Photometric measuring device for measuring the level of attenuation in the propagation of light in a liquid sample containing non-isometric particles, comprising a three-dimensional flow cell for aligning the particles in the liquid sample in two axes according to Claim 1 or 2.

7. Photometric measuring device according to Claim 6, **characterized in that** the photometric measuring device is a reflectance sensor.

8. Photometric measuring device according to Claim 7, built up from
a) an optical unit, which comprises
aa) a light source in the form of a lamp, and
ab) an optical waveguide comprising fiber optics, at least one optical waveguide being a reference waveguide,
b) a sample analysis unit, which comprises
ba) a measuring window, and
bb) a sample analysis cell with the three-dimensional flow cell,
the optical unit being arranged on one side of the measuring window and the sample analysis cell with the three-dimensional flow cell being arranged on the other side of the measuring window, by said cell being pressed against the measuring window in such a way that a gap is formed between the measuring window and sample analysis cell, which gap a liquid sample to be measured containing non-isometric particles must traverse, the liquid sample to be measured being led up to the gap through the three-dimensional flow cell, which is arranged upstream of the gap, in a special flow guide,
and
c) a system control unit comprising detectors for recording measured data and an evaluation device connected thereto,
at least one optical waveguide connection being led from the light source to the measuring window and from the measuring window onward to the detector, to generate a measured signal, and at least one reference waveguide connection being led directly from the light source to the detector or from the measuring window to the detector, to generate a reference signal.

9. Photometric measuring device according to Claim 8, **characterized in that** the lamp is selected from the group comprising LEDs, gas discharge lamps and lamps with incandescent filaments.

10. Photometric measuring device according to either of Claims 8 and 9, **characterized in that** the lamp has an integrated shutter.

11. Photometric measuring device according to one of Claims 8 to 10, **characterized in that** the optical waveguides are fibers of 100, 200, 400, 600 or 800 µm fiber diameter.

12. Photometric measuring device according to one of Claims 8 to 11, **characterized in that** the fiber used as a reference waveguide has a matched, preferably smaller, diameter than the remaining optical waveguides.

13. Photometric measuring device according to one of Claims 8 to 12, **characterized in that** it additionally has at least one of the following features:
ac) arranged behind the lamp is a compensation filter, which linearises the spectrum of the lamp in such a way that the difference between the highest and lowest intensity of the light emitted by the lamp is as small as possible, for example a maximum of a factor 4,
ad) arranged behind the lamp - between lamp and compensation filter if a compensation filter is used - are an IR blocking filter, a condenser and a diffuser,
ae) the optical waveguides are guided in protective tubes and are supported over their entire length by means of a supporting frame,
af) the reference waveguide is led via a precise spacing element with incorporated diffuser, and attenuated in a defined manner.

14. Photometric measuring device according to one of Claims 8 to 13, **characterized in that** the measuring window is a planar plate, preferably a planar plate of glass, semi-precious stones or diamond, particularly preferably of 1 to 20 mm thickness and 40 to 100 mm diameter.

15. Photometric measuring device according to one of Claims 8 to 14, **characterized in that** the gap is 2 to 10 mm long and between 0.05 and 5 mm high.

16. Photometric measuring device according to one of Claims 8 to 15, **characterized in that**, during the traverse of the liquid sample containing particles, considerable shearing of the sample takes place, which is preferably achieved by means of a pressure drop from the inlet point of the sample into the gap as far as its outlet point of 0.1 to 3 bar over 2 to 10 mm length.

17. Photometric measuring device according to one of Claims 8 to 16, **characterized in that** the sample analysis cell is removable.

18. Photometric measuring device according to one of Claims 8 to 17, **characterized in that** the system control unit has detectors in the form of fiber-optic monolithic diode line sensors which permit a resolution of at least 15 bits.

19. Photometric measuring device according to one of Claims 7 to 18, **characterized in that** all the units of the measuring device are accommodated in a common housing, in which ventilation and thermostat-regulated heat dissipation are carried out.

20. Method of measuring the reflectance of a liquid sample containing non-isometric particles, comprising:
i) forming a sample stream of a sample containing non-isometric particles with a defined thickness and defined alignment of the particles in the sample in two axes using a three-dimensional flow cell according to Claim 1 or 2,
ii) irradiating the sample stream at one or more angles with electromagnetic radiation emitted by a light source, the electromagnetic radiation interacting with the sample and some of the radiation being reflected diffusely following interaction with the sample,
iii) receiving and registering the diffusely reflected radiation as a reflectance signal at a plurality of angles,
iv) receiving and registering a reference signal, the reference signal being electromagnetic radiation which is emitted by the same light source used to irradiate the sample stream but which does not interact with the sample,
the reflectance signal and the reference signal being registered simultaneously.

21. Use of a photometric measuring device according to one of Claims 7 to 19 for measuring the reflectance of a liquid sample containing non-isometric particles, preferably a liquid sample in the form of a liquid pigment preparation containing non-isometric particles.

22. Use of a photometric measuring device according to one of Claims 7 to 19 for the reflectance measurement of liquid pigment preparations containing non-isometric particles at any desired process stage during the production, further processing and use of liquid pigment preparations, for quality assessment during coating production, for controlling a metering system during the production of coatings by mixing various liquids, for automatically regulated color adjustment by means of tinting during coating production, for matching the color of the coating in a coating installation which has a metering system for color pastes, for monitoring subsequent color changes as a result of ageing or shear stressing of pigmented coatings or pigment pastes and/or for monitoring product quality in ring mains of ring main installations.

23. Photometric measuring device according to one of Claims 7 to 19, **characterized in that** irradiation of the sample at one or more angles with electromagnetic radiation emitted by a light source takes place and reception and registration of a reflectance signal at a plurality of angles takes place.

## Revendications

1. Cellule d'écoulement tridimensionnelle destinée à aligner suivant deux axes des particules non isométriques d'un échantillon liquide, la cellule présentant
une zone d'amenée d'échantillon qui contient des particules non isométriques à aligner,
une sortie d'échantillon qui contient des particules non isométriques alignées suivant deux axes et
une zone de dilatation,
un élément fluide de l'échantillon présentant les dimensions a, b, c étant déformé dans la zone de dilatation en un élément fluide de dimension a x n, b/(n x m), c x m, a étant la largeur, b la hauteur et c la longueur de l'élément fluide, n et m étant des constantes qui dépendent de la géométrie de la cellule d'écoulement et représentant des nombres positifs > 1.

2. Cellule d'écoulement tridimensionnelle selon la revendication 1, **caractérisée en ce que** n = m.

3. Procédé d'alignement de particules non isométriques dans un échantillon liquide, l'échantillon liquide traversant une cellule d'écoulement tridimensionnelle selon les revendications 1 ou 2, un élément fluide de l'échantillon liquide présentant les dimensions a, b, c étant déformé dans la zone de dilatation en un élément fluide de dimension a x n, b/(n x m), c x m, a étant la largeur, b la hauteur et c la longueur de l'élément fluide, m et n étant des constantes qui dépendent de la géométrie de la cellule d'écoulement et représentant des nombres positifs > 1.

4. Procédé selon la revendication 3, **caractérisé en ce que** n = m.

5. Utilisation d'une cellule d'écoulement tridimensionnelle selon les revendications 1 ou 2, pour aligner bidimensionnellement suivant deux axes des particules non isométriques dans un échantillon liquide et de préférence pour aligner des particules non isométriques dans des préparations liquides de pigments.

6. Dispositif de mesure photométrique destiné à mesurer le degré d'amortissement de la propagation de la lumière dans un échantillon liquide contenant des particules non isométriques et comprenant une cellule d'écoulement tridimensionnelle destiné à aligner les particules de l'échantillon liquide suivant deux axes selon les revendications 1 ou 2.

7. Dispositif de mesure photométrique selon la revendication 6, **caractérisé en ce que** le dispositif de mesure photométrique contient un capteur de rémission.

8. Dispositif de mesure photométrique selon la revendication 7, constitué de :
a) une unité optique qui comporte
aa) une source de lumière qui présente la forme d'une lampe et
ab) un conducteur d'ondes lumineuses comprenant au moins une optique à fibres, au moins un conducteur d'ondes lumineuses étant un conducteur de référence,
b) une unité d'analyse d'échantillon qui contient
ba) une fenêtre de mesure et
bb) une cellule d'analyse d'échantillon qui présente la cellule d'écoulement tridimensionnelle,
l'unité optique étant disposée sur un côté de la fenêtre de mesure et la cellule d'analyse d'échantillon présentant la cellule d'écoulement tridimensionnelle étant disposée sur l'autre côté de la fenêtre de mesure et étant repoussée contre la fenêtre de mesure de manière à former entre la fenêtre de mesure et la cellule d'analyse d'échantillon un interstice devant être traversé par un échantillon liquide à mesurer qui contient des particules non isométriques, l'échantillon liquide à mesurer étant amené le long de l'interstice dans un guidage particulier de l'écoulement à travers la cellule d'écoulement tridimensionnelle disposée en avant de l'interstice et
c) une unité de contrôle de système qui comprend des détecteurs qui enregistrent des données de mesure et un appareil d'évaluation qui y est raccordé,
au moins une liaison par conducteur d'ondes lumineuses étant prévue entre la source de lumière et la fenêtre de mesure et entre la fenêtre de mesure et le détecteur pour former un signal de mesure et au moins une liaison par conducteur de référence étant prévue directement entre la source de lumière et le détecteur ou entre la fenêtre de mesure et le détecteur pour former un signal de référence.

9. Dispositif de mesure photométrique selon la revendication 8, **caractérisé en ce que** la lampe est sélectionnée dans l'ensemble constitué des LED, des lampes à décharge dans un gaz et des lampes à filament.

10. Dispositif de mesure photométrique selon l'une des revendications 8 ou 9, **caractérisé en ce que** la lampe présente un obturateur intégré.

11. Dispositif de mesure photométrique selon l'une des revendications 8 à 10, **caractérisé en ce que** le conducteur d'ondes lumineuses est constitué de fibres dont le diamètre est de 100, 200, 400, 600 ou 800 µm.

12. Dispositif de mesure photométrique selon l'une des revendications 8 à 11, **caractérisé en ce que** les fibres utilisées comme conducteur de référence présentent un diamètre adapté et de préférence plus petit que celui des autres conducteurs d'ondes lumineuses.

13. Dispositif de mesure photométrique selon l'une des revendications 8 à 12, **caractérisé en ce qu'**il présente en outre au moins l'une des caractéristiques suivantes :
ac) un filtre de compensation disposé en aval de la lampe, qui linéarise le spectre de la lampe de telle sorte que la différence entre l'intensité la plus élevée et l'intensité la plus basse de la lumière émise par la lampe soit aussi petite que possible, par exemple d'au plus un facteur 4,
ad) un filtre de blocage des IR, un condensateur et un disque de diffusion sont disposés en aval de la lampe lorsqu'un filtre de compensation est utilisé entre la lampe et le filtre de compensation,
ae) les conducteurs d'ondes lumineuses sont passés dans un tuyau flexible de protection et sont protégés sur toute leur longueur au moyen d'un bâti de soutien et
af) le conducteur de référence est guidé par un élément d'écartement précis à disque de diffusion intégré et est affiné de manière définie.

14. Dispositif de mesure photométrique selon l'une des revendications 8 à 13, **caractérisé en ce que** la fenêtre de mesure est une plaque plane, de préférence une plaque plane en verre, en blocs Halbedel ou en diamant, de façon particulièrement préférable d'une épaisseur de 1 à 20 mm et d'un diamètre de 40 à 100 mm.

15. Dispositif de mesure photométrique selon l'une des revendications 8 à 14, **caractérisé en ce que** l'interstice a une longueur de 2 à 10 mm et une hauteur comprise entre 0,05 et 5 mm.

16. Dispositif de mesure photométrique selon l'une des revendications 8 à 15, **caractérisé en ce que** la traversée de l'échantillon liquide contenant des particules a pour effet un cisaillement important de l'échantillon qui est obtenu de préférence par une chute de pression de 0,1 à 3 bars sur une longueur de 2 à 10 mm entre l'emplacement d'entrée de l'échantillon dans l'interstice et l'emplacement de sa sortie.

17. Dispositif de mesure photométrique selon l'une des revendications 8 à 16, **caractérisé en ce que** la cellule d'analyse d'échantillon peut être enlevée.

18. Dispositif de mesure photométrique selon l'une des revendications 8 à 17, **caractérisé en ce que** l'unité de contrôle du système présente des détecteurs en forme de capteurs monolithiques à lignes de diode et fibres optiques qui permettent une résolution d'au moins 15 bits.

19. Dispositif de mesure photométrique selon l'une des revendications 8 à 18, **caractérisé en ce que** toutes les unités du dispositif de mesure sont placées dans un boîtier commun dans lequel ont lieu une ventilation et une évacuation de chaleur régulée par thermostat.

20. Procédé de mesure de la rémission d'un échantillon liquide contenant des particules non isométriques, le procédé comportant les étapes qui consistent à :
i) former un écoulement d'échantillon contenant des particules non isométriques d'une épaisseur définie et avec une orientation définie des particules de l'échantillon suivant deux axes en recourant à une cellule d'écoulement tridimensionnelle selon les revendications 1 ou 2,
ii) irradier l'écoulement d'échantillon sous un ou plusieurs angles par un rayonnement électromagnétique émis par une source de lumière, le rayonnement électromagnétique interagissant avec l'échantillon et une partie du rayonnement étant réfléchie en mode diffus selon l'interaction avec l'échantillon,
iii) recevoir et saisir le rayonnement diffus réfléchi en tant que signal de rémission sous plusieurs angles,
iv) recevoir et saisir un signal de référence, le signal de référence étant un rayonnement électromagnétique émis par la source de lumière qui sert à irradier l'écoulement d'échantillon et qui n'entre pas en interaction avec l'échantillon,
le signal de rémission et le signal de référence étant saisis simultanément.

21. Utilisation d'un dispositif de mesure photométrique selon l'une des revendications 7 à 19 pour mesurer la rémission d'un échantillon liquide contenant des particules non isométriques, de préférence d'un échantillon liquide qui présente la forme d'une préparation liquide de pigments contenant des particules non isométriques.

22. Utilisation d'un dispositif de mesure photométrique selon l'une des revendications 7 à 19 pour mesurer la rémission de préparations liquides de pigments contenant des particules non isométriques dans une étape quelconque du procédé de fabrication, de transformation et d'utilisation de préparations liquides de pigments, pour l'évaluation de la qualité dans la fabrication de peinture, pour commander une installation de dosage en fabrication de peinture, dans le mélange de différents liquides, pour le réglage automatique de la couleur par coloration en production de peinture, pour l'adaptation de la couleur de la peinture dans une installation de peinture qui présente une installation de dosage de pâte colorée, pour le contrôle de modifications ultérieures de la couleur par vieillissement ou sollicitation de cisaillement de peintures pigmentées ou de pâtes de pigments et/ou pour le contrôle de la qualité des produits dans des conduits annulaires d'installations de conduits annulaires.

23. Dispositif de mesure photométrique selon l'une des revendications 7 à 19, **caractérisé en ce que** l'irradiation de l'échantillon par un rayonnement électromagnétique émis par une source de lumière s'effectue suivant un ou plusieurs angles et **en ce que** la réception et la saisie du signal de rémission s'effectuent sous plusieurs angles.
